(19) Europäisches Patentamt
European Patent Office
Office européen des brevets

(11) EP 3 585 751 B1

(12) **EUROPÄISCHE PATENTSCHRIFT**

(45) Veröffentlichungstag und Bekanntmachung des Hinweises auf die Patenterteilung:
**08.07.2026 Patentblatt 2026/28**

(21) Anmeldenummer: **18705939.9**

(22) Anmeldetag: **22.02.2018**

(51) Internationale Patentklassifikation (IPC):
***C04B 22/00*** *(2006.01)* ***C04B 14/04*** *(2006.01)*
***C04B 28/02*** *(2006.01)*

(52) Gemeinsame Patentklassifikation (CPC):
(C-Sets verfügbar)
**C04B 14/043; C04B 22/00863; C04B 28/02;**
C04B 2103/14; Y02W 30/91 (Forts.)

(86) Internationale Anmeldenummer:
**PCT/EP2018/054430**

(87) Internationale Veröffentlichungsnummer:
**WO 2018/154012 (30.08.2018 Gazette 2018/35)**

(54) **SEMIGEORDNETES CALCIUMSILIKATHYDRAT ENTHALTENDE ZUSAMMENSETZUNG**

COMPOSITION COMPRISING CALCIUM SILICATE HYDRATE

COMPOSITION COMPRENANT SILICATE DE CALCIUM HYDRATÉ HYDROTHERMAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2017 EP 17157418**

(43) Veröffentlichungstag der Anmeldung:
**01.01.2020 Patentblatt 2020/01**

(73) Patentinhaber: **BASF SE**
**67056 Ludwigshafen am Rhein (DE)**

(72) Erfinder:
- **HESSE, Christoph**
  **83308 Trostberg (DE)**
- **DIETZSCH, Michael**
  **83308 Trostberg (DE)**
- **DAL, Attila**
  **45721 Haltern am See (DE)**
- **BECKER, Maria**
  **45721 Haltern am See (DE)**

(74) Vertreter: **BASF IP Association**
**BASF SE**
**GBI - Z078**
**67056 Ludwigshafen (DE)**

(56) Entgegenhaltungen:
**EP-A1- 2 607 329** **WO-A1-2010/026155**
**WO-A1-2013/017391** **WO-A1-2015/086453**
**WO-A1-2016/192745** **WO-A1-95/04007**

- **TASHIRO ET AL: "Effect upon strength of cement paste by addition of cement hydrates", 23RD GENERAL MEETING OF CEMENT ASSOCIATION JAPAN,, 1 January 1969 (1969-01-01), pages 136 - 141, XP009195221**

Bemerkungen:
Die Akte enthält technische Angaben, die nach dem Eingang der Anmeldung eingereicht wurden und die nicht in dieser Patentschrift enthalten sind.

EP 3 585 751 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C04B 14/043, C04B 40/024, C04B 2103/408;**
**C04B 22/00863, C04B 40/024, C04B 2103/408;**
**C04B 28/02, C04B 7/32, C04B 7/323, C04B 14/06,**
**C04B 14/106, C04B 14/108, C04B 18/08,**
**C04B 18/141, C04B 22/00863, C04B 2103/0088**

## Beschreibung

Die vorliegende Erfindung betrifft eine Calciumsilikathydrat enthaltende Zusammensetzung, die insbesondere als Härtungsbeschleuniger für hydraulische Bindemittel geeignet ist, ein Verfahren zur Herstellung der Zusammensetzung sowie deren Verwendung.

Bei der Zementhydratation reagieren die verschiedenen Zementklinkerphasen mit Wasser im Wesentlichen zu den Hydratphasen Calciumsilikathydrat, Ettringit, CalciumAluminat-Ferrit-Phasen, Monosulfat (Kuzelit) und Portlandit.

Aus der WO 2010/026155 ist bekannt, die Zementhydratation durch Zugabe von Calciumsilikathydrat-Keimen zu Zement beschleunigen. Somit lässt sich die Festigkeitsentwicklung eines Zements durch die Zugabe von derartigen Calciumsilikathydrat-Keimen beschleunigen. Die Calciumsilikathydrat-Keime sind erhältlich durch Umsetzung einer wasserlöslichen Calciumkomponente mit einer wasserlöslichen Siliziumkomponente in wässriger Lösung oder durch Umsetzung einer Calciumverbindung mit Siliciumdioxid, jeweils in Anwesenheit eines wasserlöslichen Kammpolymers, welches als Fließmittel für hydraulische Bindemittel geeignet ist. Die dabei erhaltenen Zusammensetzungen besitzen eine ausgezeichnete Beschleunigungswirkung, aber auch eine relativ hohe Viskosität, welche die Anwendung erschweren kann, beispielsweise, wenn die Zusammensetzung gepumpt oder versprüht werden muss. Außerdem enthalten die durch Umsetzung einer wasserlöslichen Calciumkomponente mit einer wasserlöslichen Siliziumkomponente erhaltenen Zusammensetzungen Fremdionen, wie Chlorid und Nitrat, die anwendungs-technische Nachteile, wie Korrosivität, mit sich bringen.

Aus der WO 95/04007 ist ein Erstarrungs- und Härtungsbeschleuniger für silikatische, hydraulische Bindemittel bekannt, der insbesondere aus der Hydratation von Portland-Zementen, zerkleinerten Portland-Klinkern oder zusammengesetzten Portland-Zementen oder Mischungen der vorgenannten Ausgangsmaterialien durch Hydratisierung bei <90 ° C und anschließendes Vermahlen erhalten wird.

Die WO 2013/017391 beschreibt ein Verfahren zur Herstellung eines rasch abbindenden hydraulischen Bindemittels durch Vermahlen eines Zementklinkers mit 0.1 bis 5 Gew.-% eines Materials, das mehr als 15 Gew.-% Calciumsilikathydrat enthält. Dabei können auch Wasserreduzierer mitvermahlen werden, bei denen es sich um Polyoxyalkylenpolyarboxylate handelt. Als Calciumsilikathydrat enthaltendes Material wird dabei das kommerziell erhältliche, kristalline Circolit® eingesetzt.

G. Land and D. Stephan, Cement & Concrete Composites 57 (2015) 64-67 beschreiben die Verwendung von Tobermorit-Partikeln (630 nm) und Xonotlit-Partikeln (420 nm) zur Beschleunigung der Zementhydratation durch Zugabe einer wässrigen Dispersion der Partikel zu CEM I Weißzement. Es hat sich gezeigt, dass der Beschleunigungseffekt der Xonotlit-Partikel größer ist als der der Tobermorit-Partikel.

Die EP 2 243 754 A1 beschreibt ein Verfahren zur Herstellung eines belithaltigen Bindemittels, bei dem man ein Ausgangsmaterial, das Calcium-, Silizium- und Sauerstoffatome enthält, mit Wasser versetzt, bei einer Temperatur von 120 ° C bis 250 ° C hydrothermal behandelt und das erhaltene Zwischenprodukt einem Reaktionsmahlen bei einer Temperatur von 100 ° C bis 200 ° C über einen Zeitraum von 5 bis 30 Minuten unterwirft. Dabei wird unter Reaktion und Entwässerung das belithaltige Bindemittel gebildet, das wie Portlandzement eingesetzt werden kann.

Die EP 2 801 557 B9 beschreibt ein Verfahren zur Herstellung eines hochreaktiven Bindemittels, wobei man ein Ausgangsmaterial aus einem oder mehreren Rohstoffen, die CaO, MgO, $SiO_2$, $Al_2O_3$ und $Fe_2O_3$ oder andere Verbindungen dieser Elemente enthalten, vermischt. Die Mischung, die zwingend Mg und Al enthält, wird hydrothermal bei 100 bis 300 ° C und einer Verweilzeit von 0,1 bis 24 h behandelt und das erhaltene Zwischenprodukt wird bei 350 bis 600 ° C getempert. Das erhaltene Produkt enthält mindestens ein Calciumsilikat und mindestens ein Calciumaluminat.

Die EP 2 801 558 A1 beschreibt ein ähnliches Verfahren, wobei das Verfahrensprodukt jedoch als Beschleuniger des Ansteifens/Erstarrens und/oder der Erhärtung von Portlandzement verwendet wird.

Die EP 2 801 559 A1 beschreibt ein Verfahren zur Verstärkung der latent hydraulischen und/oder puzzolanischen Reaktivität von Materialien, wie Abfall- und Nebenprodukten, wobei ein Ausgangsmaterial, das eine CaO-Quelle und eine Quelle für $SiO_2$ und/oder $Al_2O_3$ enthält, mit Wasser vermischt und hydrothermal bei 100 ° C bis 300 ° C und einer Verweilzeit von 0,1 bis 50 h behandelt. Das erhaltene Produkt besitzt hydraulische, puzzolanische oder latent hydraulische Reaktivität.

Die WO 2017/032719 beschreibt ein Verfahren zur Herstellung einer Zusammensetzung, welche sich als Beschleuniger für die Aushärtung von Zement eignet. Das Verfahren umfasst das in Kontakt bringen eines hydraulischen oder latent hydraulischen Bindemittels mit einem Dispergiermittel, welches für die Dispergierung anorganischer Partikel in Wasser geeignet ist.

TASHIRO et al., 23rd general Meeting of Cement Association Japan, 1. Januar 1969, Seiten 136-141, untersuchen den Einfluss von synthetischem Calciumsilikathydrat auf die Festigkeit von Zementleim. Das synthetische Calciumsilikathydrat wurde bei 130 ° C 5 Tage bei 5-10 atms hergestellt. Aus dem Röntgenbeugungsdiagramm ist ersichtlich, dass das synthetische Calciumsilikathydrat erhebliche Mengen Quarz enthält.

Die EP2607329 betrifft Zusatzmittel für hydraulische Bindemittel und daraus hergestellte Systeme wie Beton und Mörtel. Insbesondere werden Abbinde- und Erhärtungsbeschleuniger für hydraulische Bindemittel vorgeschlagen,

die durch Umsetzung einer Calciumverbindung mit einem Silica-Sol erhalten werden.

Die aus dem Stand der Technik bekannten Beschleuniger auf Calciumsilikathydrat-Basis besitzen entweder eine nicht zufriedenstellende Beschleunigungswirkung oder bringen anwendungstechnische Nachteile mit sich (zu hohe Viskosität, Korrosivität), so dass die wirtschaftlich sinnvollen Einsatzmöglichkeiten begrenzt sind.

Der vorliegenden Erfindung liegt daher die Aufgabe zugrunde, eine Calciumsilikathydrat enthaltende Zusammensetzung bereitzustellen, welche insbesondere eine zufriedenstellende Beschleunigungswirkung auf die Erhärtung von hydraulischen bzw. latent hydraulischen Bindemitteln besitzt und verbesserte anwendungstechnische Eigenschaften aufweist. Insbesondere soll die Zusammensetzung einfach zu handhaben sein, insbesondere eine Viskosität aufweisen, die ein leichtes Pumpen und Versprühen der Zusammensetzung erlaubt, und sich als Erhärtungsbeschleuniger für hydraulisch bzw. latent hydraulisch abbindende Bindemittel eignen und somit die Frühfestigkeit der hydraulisch bzw. latent hydraulisch abbindenden Bindemittel, insbesondere von Portland-Zement, verbessern. Weiterhin soll die Zusammensetzung mit billigen und leicht verfügbaren Rohstoffen wirtschaftlich günstig herstellbar sein.

Unter Frühfestigkeit ist hier bei hydraulisch abbindenden Bindemitteln die Druckfestigkeit 6 Stunden nach dem Anmischen des hydraulisch abbindenden Bindemittels mit Wasser zu verstehen. Bei latent hydraulisch abbindenden Bindemitteln ist unter Frühfestigkeit die Druckfestigkeit 7 Tage nach dem Anmischen des hydraulisch abbindenden Bindemittels mit Wasser zu verstehen.

Überraschenderweise wurde gefunden, dass diese Aufgabe gelöst wird durch eine Zusammensetzung, geeignet zur Erhärtungsbeschleunigung von bauchemischen Mischungen, enthaltend ein hydraulisches oder latent hydraulisches Bindemittel, umfassend einen mineralischen Bestandteil und ein polymeres wasserlösliches Dispergiermittel, wobei der mineralische Bestandteil ein semigeordnetes Calciumsilikathydrat mit einer scheinbaren Kristallitgröße von 1 bis 15 nm, welche mittels Röntgenbeugung und Rietveld-Analyse bestimmt wird und weniger als 35 Gew.- %, bezogen auf das Trockengewicht des mineralischen Bestandteils, an kristallinen Phasen, die keine Calciumsilikathydrat-Phase (C-S-H) sind enthält, wobei unter "semigeordnet" verstanden wird, dass das Calciumsilikathydrat (1) einen geringeren Ordnungsgrad als ein makroskopisches kristallines Calciumsilikathydrat und (2) einen höheren Ordnungsgrad als amorphes Calciumsilikathydrat aufweist und wobei der Hauptbeugungspeak des semigeordneten Calciumsilikathydrats im Röntgenbeugungsdiagramm eine Halbwertsbreite aufweist, die wenigstens das 1,25 fache der Halbwertsbreite des entsprechenden Hauptbeugungspeaks der kristallinen Form mit einer Kristallitgröße von 50 nm oder größer beträgt.

Es wurde gefunden, dass die erfindungsgemäße Zusammensetzung eine ausgeprägtere Beschleunigungswirkung auf die Erhärtung von hydraulischen bzw. latent hydraulischen Bindemitteln besitzt als Vergleichszusammensetzungen, worin der mineralische Anteil ein Calciumsilikathydrat mit höherem Kristallinitätsgrad umfasst. Andererseits bleiben erfindungsgemäße Zusammensetzungen im Gegensatz zu solchen auf der Basis von Calciumsilikathydrat-Gelen bzw. vollständig amorphen Calciumsilikathydraten auch bei hohen Feststoffgehalten pumpfähig.

Der hier verwendete Ausdruck "umfassend" oder "umfasst" beinhaltet auch die Ausdrücke "im Wesentlichen bestehend aus" und "bestehend aus" ohne mit diesen Ausdrücken synonym zu sein.

Mineralischer Bestandteil

Der mineralische Bestandteil der erfindungsgemäßen Zusammensetzung umfasst vorzugsweise mindestens 95 Gew.-%, bevorzugt mindestens 98 Gew.-%, bezogen auf das Trockengewicht des mineralischen Bestandteils, Calciumoxid (CaO) und Siliciumoxid ($SiO_2$). Das molare Verhältnis Ca/Si im mineralischen Bestandteil liegt vorzugsweise im Bereich von 0,5 bis 2,5, bevorzugt 0,8 bis 2,2, besonders bevorzugt 1,0 bis 2,0 oder 1,6 bis 2,0.

Aufgrund herstellungsbedingter Unreinheiten kann der mineralische Bestandteil geringe Mengen Aluminium-Ionen enthalten, wobei das molare Verhältnis von Silicium / Aluminium im mineralischen Bestandteil bei 10000 : 1 bis 2 : 1, bevorzugt bei 1000 : 1 bis 5 : 1, und besonders bevorzugt bei 100 : 1 bis 10 : 1 liegt.

Der mineralische Bestandteil ist im Wesentlichen frei von Zement, Zementklinker und/oder Ettringit. "Im Wesentlichen frei" bedeutet hier weniger als 10 Gew.-% oder weniger als 5 Gew.-%, bevorzugt weniger als 1 Gew.-% und insbesondere 0 Gew.-%, jeweils bezogen auf das Gesamtgewicht des mineralischen Bestandteils.

Der mineralische Bestandteil der erfindungsgemäßen Zusammensetzung umfasst ein semigeordnetes Calciumsilikathydrat. Semigeordnetes Calciumsilikathydrat weist physikalische Eigenschaften auf, die sich sowohl von der reinen kristallinen Form als auch der reinen amorphen Form unterscheiden.

Eine geeignete Methode zur Bestimmung, ob ein Calciumsilikathydrat semigeordnet vorliegt, bedient sich der Röntgenbeugung. Beugungsdiagramme des Calciumsilikathydrats können mit einem handelsüblichen Pulverdiffraktometer aufgenommen werden. Das Röntgenbeugungsdiagramm des semigeordneten Calciumsilikathydrats unterscheidet sich vom Röntgenbeugungsdiagramm eines kristallinen Calciumsilikathydrats. Semigeordnetes Calciumsilikathydrat zeigt ein Beugungsdiagramm, bei dem die Reflexe bzw. Beugungslinien oder "Peaks" im Vergleich zum Beugungsdiagramm der kristallinen Form breiter bzw. weniger definiert und/oder teilweise abwesend sind. Unter "Peak" wird im Folgenden ein Maximum in der Auftragung der Röntgenbeugungsintensität gegen den Beugungswinkel verstanden. Der

Hauptbeugungspeak des semigeordneten Calciumsilikathydrats weist eine Halbwertsbreite auf, die wenigstens das 1,25-fache, meist wenigstens 2-fache oder wenigstens 3-fache der Halbwertsbreite des entsprechenden Hauptbeugungspeaks der kristallinen Form mit einer Kristallitgröße von 50 nm oder größer beträgt.

Andererseits unterscheidet sich das Röntgenbeugungsdiagramm des semigeordneten Calciumsilikathydrats auch von der rein röntgenamorphen Form. Das Röntgenbeugungsdiagramm des semigeordneten Calciumsilikathydrats zeigt wenige breite phasenspezifische Röntgenbeugungsmaxima, die auf eine gewisse Ordnung des Calciumsilikathydrats hindeuten, während die röntgenamorphe Form keine unterscheidbaren Röntgenbeugungsmaxima zeigt. Der röntgenamorphen Form kann keine Calciumsilikathydratphase eindeutig zugeordnet werden.

Das semigeordnete Calciumsilikathydrat weist eine Fernordnung von weniger als 100 Wiederholungseinheiten, meist weniger als 20 Wiederholungseinheiten, der Elementarzelle in wenigstens einer Raumrichtung auf. Sind die kohärent streuenden Bereiche (Kristallite), welche den Wiederholungseinheiten der Elementarzelle entsprechen, in einer Probe sehr klein, so sind die einzelnen Kristallite, die sich eigentlich in Reflexlage befinden, oft schwach gegeneinander verkippt. Außerdem kommt es durch die Störung der Struktur an den Korngrenzen zu Veränderungen im Beugungsverhalten. Dadurch verbreitert sich der Winkelbereich, in dem es noch zu Reflexen und damit zu einem Beugungssignal kommt. Eine "scheinbare" Kristallitgröße kann nach Scherrer aus den Halbwertsbreiten von Röntgenbeugungssignalen berechnet werden:

$$\beta = \lambda \ / \varepsilon \ \cos\theta$$

$\beta$ = Halbwertsbreite
A = Wellenlänge
$\varepsilon$ = **scheinbare Kristallitgröße**
$\theta$ = Bragg-Winkel

In der Praxis hat sich zur Auswertung des Beugungsdiagramms die "Whole-Pattern-Fitting-Structure-Refinement (PFSR)", von Hugo Rietveld bewährt ("Rietveld-Analyse"). Dieses Software-Verfahren dient zur Verfeinerung einer Vielzahl von Messparametern, einschließlich Gitterparametern, Signalbreite und -form. So können theoretische Beugungsmuster errechnet werden. Sobald das berechnete Beugungsmuster nahezu identisch mit den Daten einer unbekannten Probe ist, können präzise quantitative Informationen zu Kristallitgröße und amorphen Anteilen bestimmt werden.

Erfindungsgemäß weist das semigeordnete Calciumsilikathydrat eine scheinbare Kristallitgröße von 1 bis 15 nm, oder 1 bis 10 nm und besonders bevorzugt 1 nm bis 5 nm auf, bestimmt mittels Röntgenbeugungsanalyse und anschließender Rietveld-Analyse.

Die Elementarzellen der geordneten Bereiche des semigeordneten Calciumsilikathydrats, deren Größe in der vorliegenden Anmeldung anhand ihrer scheinbaren Kristallitgröße beschrieben wird, leiten sich von kristallinen Calciumsilikathydrat-Phasen (C-S-H) ab. Kristalline Calciumsilikathydrat-Phasen sind insbesondere Foshagit, Hillebrandit, Xonotlit (Belov), Xonotlit (Kudoh), Nekoit, Clinotobermorit, 9Å - Tobermorit (Riversiderit), 10Å - Tobermorit, 11Å - Tobermorit (C/S 0,75 und 0,66), 14 Å - Tobermorit (Plombierit), Jennit, Metajennit, Calcium Chondrodit, Afwillit, $\alpha$ -$C_2SH$, Dellait, Jaffeit, Rosenhahnit, Killalait, Bultfonteinit, Reinhardbraunsit, Kilchoanit, $C_8S_5$, Okenit, Reyerit, Gyrolith, Truscottit, K-Phase, Z-Phase, Scawtit, Fukalit, Tylleit, Spurrit und/oder Suolunit vor, bevorzugt als Xonotlit, 9Å-Tobermorit (Riversiderit), 11Å - Tobermorit, 14 Å - Tobermorit (Plombierit), Jennit, Metajennit, Afwillit und/oder Jaffeit.

Bevorzugt leiten sich die Elementarzellen der geordneten Bereiche von 9Å - Tobermorit (Riversiderit), 10Å - Tobermorit, 11Å - Tobermorit (C/S 0,75 und 0,66), 14 Å - Tobermorit (Plombierit), Scawtit und/oder Xonotlit oder Gemischen ab.

Es hat sich für die vorliegenden Zwecke als ausreichende Näherung erwiesen, für die Bestimmung der scheinbaren Kristallitgröße ausschließlich die Elementarzelle von 14 Å - Tobermorit (Plombierit) heranzuziehen.

Der mineralische Bestandteil enthält weniger als 35 Gew.-%, bezogen auf das Trockengewicht des mineralischen Bestandteils, an kristallinen Phasen, die vom semigeordneten Calciumsilikathydrat verschieden sind, d.h. kristallinen Phasen, die keine Calciumsilikathydrat-Phase (C-S-H) sind (im Folgenden auch: "kristalline Fremdphasen"). Kristalline Fremdphasen sind Portlandit ($Ca(OH)_2$), Calcit ($CaCO_3$), Aragonit ($CaCO_3$), Vaterit ($CaCO_3$) und $\alpha$ -Quarz ($SiO_2$). Der Gehalt kristalliner Fremdphasen kann im Bereich von 0,1 bis weniger als 35 Gew.-%, bevorzugt 1 bis 25 Gew.-%, liegen, bezogen auf das Trockengewicht des mineralischen Bestandteils. Das Trockengewicht wird durch Trocknung des mineralischen Bestandteils bei 105 ° C bis zur Gewichtskonstanz bestimmt.

Im Falle von Verunreinigungen mit Aluminium kann der mineralische Bestandteil auch Aluminium-haltige Phasen wie z.B. Gibbsit ($Al(OH)_3$) enthalten.

Typischerweise enthält der mineralische Bestandteil neben dem semigeordneten Calciumsilikathydrat (und gegebenenfalls kristallinen Fremdphasen) außerdem eine röntgenamorphe Phase. Gemäß einer Ausführungsform weist der mineralische Bestandteil mindestens ≥ 10 Gew.-%, bevorzugt ≥ 40 Gew.-%, besonders bevorzugt ≥ 60 Gew.-%, und

insbesondere 10 bis 99,9 Gew.-% oder 10 bis 80 Gew.-%, vorzugsweise 40 bis 80 Gew.-%, röntgenamorphe Phase, bezogen auf das Trockengewicht des mineralischen Bestandteils, auf, bestimmt mittels Röntgenbeugungsanalyse und anschließender Rietveld-Analyse.

Die Summe an semigeordnetem Calciumsilikathydrat und röntgenamorpher Phase beträgt vorzugsweise wenigstens 65 Gew.-%, z.B. 65 bis 99 Gew..-%, bezogen auf das Trockengewicht des mineralischen Bestandteils, bestimmt mittels Röntgenbeugungsanalyse und anschließender Rietveld-Analyse.

Vorzugsweise werden über den mineralischen Bestandteil keine oder nur eine sehr geringe Menge Fremdionen, wie Alkali, Chlorid- oder Nitrationen in die erfindungsgemäße Zusammensetzung eingebracht. In einer Ausführungsform enthält die erfindungsgemäße Zusammensetzung 2 Gew.-% oder weniger Alkalimetalle, bezogen auf das Trockengewicht des mineralischen Bestandteils.

Die vorliegende Erfindung sieht ein Verfahren zur Herstellung einer Calciumsilikathydrat-enthaltenden Zusammensetzung vor, wobei man einen mineralischen Bestandteil in einem wässrigen Medium mit mindestens einem wasserlöslichen polymeren Dispergiermittel durch Einbringen von kinetischer Energie in Kontakt bringt, wobei der mineralische Bestandteil ein semigeordnetes Calciumsilikathydrat mit einer scheinbaren Kristallitgröße von 1 bis 15 nm und weniger als 35 Gew.-%, bezogen auf das Trockengewicht des mineralischen Bestandteils, an kristallinen Phasen, die keine Calciumsilikathydrat-Phase (C-S-H) sind enthält, wobei der mineralische Bestandteil durch Umsetzung von Calciumoxid oder Calciumhydroxid mit Siliciumdioxid in Anwesenheit von Wasser unter hydrothermalen Bedingungen bei einer Temperatur im Bereich von 100 ° C bis 400 ° C über einen Zeitraum von 5 h bis 30 h hergestellt wird, wobei das in Kontakt bringen des mineralischen Bestandteils mit dem wasserlöslichen polymeren Dispergiermittel durch Vermahlen erfolgt.

Dabei fällt der mineralische Bestandteil als Festkörper mit physikalisch adsorbiertem Wasser an. Abgesehen von einem optionalen Trocknen bei einer Temperatur bis etwa 105 ° C wird er keiner weiteren thermischen Behandlung unterworfen. Der so hergestellte mineralische Bestandteil enthält semigeordnetes Calciumsilikathydrat, kristalline Fremdphasen einschließlich der unumgesetzten oder bei der Umsetzung gebildeten kristallinen Fremdphasen, wie Quarz, Portlandit, Calcit etc., sowie röntgenamorphe Phasen.

Die Herstellung des mineralischen Bestandteils erfolgt zweckmäßigerweise in einem geschlossenen Behälter, beispielsweise einem Autoklaven, bei einer Temperatur im Bereich von 100 ° C bis 400 ° C, insbesondere 110 bis 300 ° C oder 110 bis 230 ° C oder 130 bis 200° C oder 130 bis 180 ° C oder 155 bis 180 oder 160 bis 180 ° C und einem sich daraus ergebenden Druck. Als Calciumoxid bzw. Calciumhydroxid können zum Beispiel von Branntkalk, Löschkalk etc. verwendet werden. Als Siliciumdioxid sind beispielsweise Quarzsand bzw. Quarzmehl, Mikrosilica etc. geeignet. Weiterhin können als Ausgangsstoffe auch puzzolanische Bindemittel wie z.B. Flugaschen, Schlacken, wie Hochofenschlacke, und/oder Metakaoline eingesetzt werden. Um die Reaktion zu erleichtern und die Reaktionszeit zu verkürzen, werden die Ausgangsstoffe im Allgemeinen mit einer mittleren Teilchengröße von < 1 mm eingesetzt. Die Siliciumdioxidquelle hat im Allgemeinen eine Teilchengröße d(99-Wert) im Bereich von 1 bis 100 $\mu$m, insbesondere 1 bis 90 $\mu$m. Die Menge an Calciumoxid bzw. Calciumhydroxid und Siliciumdioxid wird im Allgemeinen so gewählt, dass das Molverhältnis von Ca/Si im mineralischen Bestandteil im Bereich von 0,5 bis 2,5, bevorzugt 0,8 bis 2,2, besonders bevorzugt 1,0 bis 2,0 oder 1,6 bis 2,0 liegt.

Es hat sich als zweckmäßig erwiesen, bei der hydrothermalen Herstellung des mineralischen Bestandteils ein Schäumungsmittel, insbesondere Aluminiumpulver oder eine metallisches Aluminium enthaltende Paste, einzusetzen.

Es hat sich als vorteilhaft erwiesen, den mineralischen Bestandteil nach der Hydrothermalsynthese zu zerkleinern. Hierzu sind übliche Vorrichtungen geeignet, wie Brecher und Kugelmühlen. Die Zerkleinerung erfolgt bis eine Teilchengröße von (d(97)-Wert) von ≤ 5 mm, bevorzugt ≤ 2 mm und insbesondere eine Teilchengröße (d(97)-Wert) im Bereich von 0,05 mm bis 5 mm, bevorzugt 0,1 mm bis 2 mm, insbesondere 0,3 mm bis 1 mm, aufweist. Die Zerkleinerung erfolgt bei einer Temperatur von ≤ 80 ° C, insbesondere ≤ 60 ° C, bevorzugt ≤ 50 ° C.

Der nach der Hydrothermalsynthese erhaltene mineralische Bestandteil wird vorzugsweise zunächst einer mechanischen Zerkleinerung bei einer Temperatur von ≤ 80 ° C, insbesondere ≤ 60 ° C, bevorzugt ≤ 50 ° C, unterworfen.

Der mineralische Bestandteil weist nach der mechanischen Zerkleinerung eine Teilchengröße (d(97)-Wert) von ≤ 5 mm, bevorzugt ≤ 2,5 mm und insbesondere ≤ 1 mm auf. Z. B. liegt die Teilchengröße (d(97)-Wert) des mineralischen Bestandteils nach der mechanischen Zerkleinerung im Bereich von 0,05 mm bis 5 mm, bevorzugt 0,1 mm bis 2 mm, insbesondere 0,3 mm bis 1 mm.

Vorzugsweise weist der mineralische Bestandteil, der mit dem polymeren Dispergiermittel in Kontakt gebracht wird, eine spezifische BET-Oberfläche im Bereich von 30 bis 150 $m^2/g$, bevorzugt 80 bis 150, insbesondere 90 bis 150 $m^2/g$, besonders bevorzugt 100 bis 150 $m^2/g$, bestimmt nach DIN ISO 9277:2003-05, auf.

## Wasserlösliches polymeres Dispergiermittel

Unter "wasserlöslichem polymerem Dispergiermittel" wird hier ein organisches wasserlösliches polymeres Dispergiermittel verstanden, d.h. es handelt sich um ein organisches Polymer, welches in Wasser bei 20 ° C und

Normaldruck eine Löslichkeit von mindestens 1 Gramm pro Liter, insbesondere mindestens 10 Gramm pro Liter und besonders bevorzugt von mindestens 100 Gramm pro Liter aufweist.

Das Dispergiermittel ist insbesondere ein Kammpolymer mit Polyether-Seitenketten, bevorzugt Polyalkylenoxid-Seitenketten.

Vorzugsweise ist das polymere Dispergiermittel ein Copolymer, das an der Hauptkette Säurefunktionen und Polyether-Seitenketten aufweist.

In einer Ausführungsform weist das polymere Dispergiermittel zumindest eine Struktureinheit der allgemeinen Formeln (Ia), (Ib), (Ic) und/oder (Id) auf, wobei die Struktureinheiten (Ia), (Ib), (Ic) und (Id) sowohl innerhalb einzelner Polymermoleküle, als auch zwischen verschiedenen Polymermolekülen gleich oder verschieden sein können.:

(Ia)

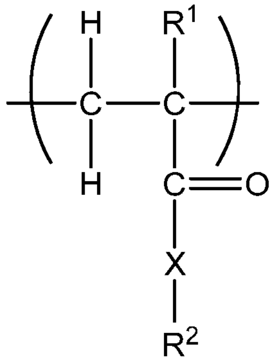

worin

- $R^1$ für H oder eine unverzweigte oder verzweigte $C_1$-$C_4$-Alkylgruppe, $CH_2COOH$ oder $CH_2CO$-X-$R^2$, vorzugsweise für H oder $CH_3$, steht;
- X für NH-($C_nH_{2n}$), O($C_nH_{2n}$) mit n = 1, 2, 3 oder 4, wobei das Stickstoffatom bzw. das Sauerstoffatom an die CO-Gruppe gebunden ist, oder für eine chemische Bindung, vorzugsweise für X = chemische Bindung oder O($C_nH_{2n}$), steht;
- $R^2$ für OM, $PO_3M_2$, O-$PO_3M_2$ oder $SO_3M$ steht; mit der Maßgabe, dass X für eine chemische Bindung steht, wenn $R^2$ für OM steht;

(Ib)

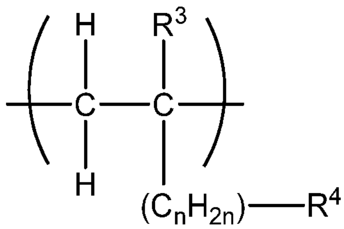

worin

- $R^3$ für H oder eine unverzweigte oder verzweigte $C_1$-$C_4$-Alkylgruppe, vorzugsweise für H oder $CH_3$, steht;
- n für 0, 1, 2, 3 oder 4, vorzugsweise für 0 oder 1, steht;
- $R^4$ für $PO_3M_2$, O-$PO_3M_2$ oder $SO_3M$ steht;

(Ic)

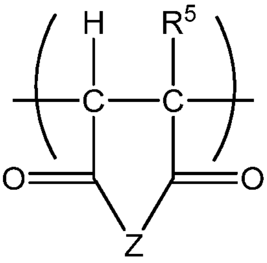

worin

- $R^5$ für H oder eine unverzweigte oder verzweigte $C_1$-$C_4$-Alkylgruppe, vorzugsweise für H, steht;
- Z für O oder $NR^7$, vorzugsweise für O, steht;
- $R^7$ für H, $(C_nH_{2n})$-OH, $(C_nH_{2n})$-$PO_3M_2$, $(C_nH_{2n})$-$OPO_3M_2$, $(C_6H_4)$-$PO_3M_2$, $(C_6H_4)$-$OPO_3M_2$, $(C_nH_{2n})$-$SO_3M$ oder $(C_6H_4)$-$SO_3M$ steht, und
- n für 1, 2, 3 oder 4, vorzugsweise für 1, 2 oder 3, steht;

(Id)

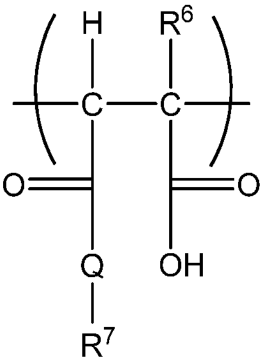

worin

- $R^6$ für H oder eine unverzweigte oder verzweigte $C_1$-$C_4$-Alkylgruppe, vorzugsweise für H, steht;
- Q für $NR^7$ oder O, vorzugsweise für O, steht;
- $R^7$ für H, $(C_nH_{2n})$-OH, (CnH2n)-$PO_3M_2$, $(C_nH_{2n})$-$OPO_3M_2$, $(C_6H_4)$-$PO_3M_2$, $(C_6H_4)$-$OPO_3M_2$, $(C_nH_{2n})$-$SO_3M$ oder $(C_6H_4)$-$SO_3M$ steht,
- n für 1, 2, 3 oder 4, vorzugsweise für 1, 2 oder 3, steht; und

jedes M in den obigen Formeln unabhängig voneinander für H oder ein Kationäquivalent steht.

Vorzugsweise weist das Kammpolymer mindestens eine Struktureinheit der Formel (Ia) auf, worin $R^1$ für H oder $CH_3$ steht; und/oder mindestens eine Struktureinheit der Formel (Ib), worin $R^3$ für H oder $CH_3$ steht; und/oder mindestens eine Struktureinheit der Formel (Ic), worin $R^5$ für H oder $CH_3$ steht und Z für O steht; und/oder mindestens eine Struktureinheit der Formel (Id), worin $R^6$ für H steht und Q für O steht.

Vorzugsweise weist das Kammpolymer mindestens eine Struktureinheit der Formel (Ia) auf, worin $R^1$ für H oder $CH_3$ steht und $XR^2$ für OM oder X für $O(C_nH_{2n})$ mit n = 1, 2, 3 oder 4, insbesondere 2, steht und $R^2$ für O-$PO_3M_2$ steht.

Vorzugsweise weist das Kammpolymer als Polyether-Seitenkette zumindest eine Struktureinheit der allgemeinen Formeln (IIa), (IIb), (IIc) und/oder (IId) auf:

(IIa)

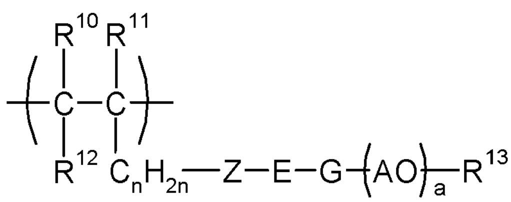

worin

| | |
|---|---|
| $R^{10}$, $R^{11}$ und $R^{12}$ | unabhängig voneinander für H oder eine unverzweigte oder verzweigte $C_1$-$C_4$-Alkylgruppe stehen; |
| Z | für O oder S steht; |
| E | für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht; |
| G | für O, NH oder CO-NH steht; oder |
| E und G | gemeinsam für eine chemische Bindung stehen; |
| A | für $C_xH_{2x}$ mit x = 2, 3, 4 oder 5 oder $CH_2CH(C_6H_5)$, vorzugsweise für 2 oder 3, steht; |
| n | für 0, 1, 2, 3, 4 oder 5, vorzugsweise für 0, 1 oder 2, steht; |
| a | für eine ganze Zahl von 2 bis 350, vorzugsweise 5 bis 150, steht; |
| $R^{13}$ | für H, eine unverzweigte oder verzweigte $C_1$-$C_4$-Alkylgruppe, CO-$NH_2$ und/oder $COCH_3$ steht; |

(IIb)

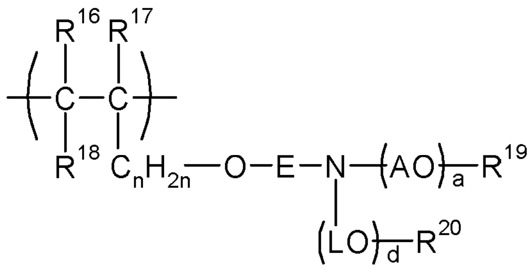

worin

| | |
|---|---|
| $R^{16}$, $R^{17}$ und $R^{18}$ | unabhängig voneinander für H oder eine unverzweigte oder verzweigte $C_1$-$C_4$-Alkylgruppe stehen; |
| E | für eine unverzweigte oder verzweigte $C_1$-$C_6$-Alkylengruppe, eine Cyclohexylengruppe, $CH_2$-$C_6H_{10}$, 1,2-Phenylen, 1,3-Phenylen, oder 1,4-Phenylen steht oder für eine chemische Bindung steht; |
| A | für $C_xH_{2x}$ mit x = 2, 3, 4 oder 5 oder $CH_2CH(C_6H_5)$, vorzugsweise für 2 oder 3, steht; |
| n | für 0, 1, 2, 3, 4 und/oder 5, vorzugsweise für 0, 1 oder 2, steht; |
| L | für $C_xH_{2x}$ mit x = 2, 3, 4 oder 5oder $CH_2$-$CH(C_6H_5)$, vorzugsweise für 2 oder 3, steht; |
| a | für eine ganze Zahl von 2 bis 350, vorzugsweise 5 bis 150, steht; |
| d | für eine ganze Zahl von 1 bis 350, vorzugsweise 5 bis 150, steht; |
| $R^{19}$ | für H oder eine unverzweigte oder verzweigte $C_1$-$C_4$-Alkylgruppe steht; |
| $R^{20}$ | für H oder eine unverzweigte $C_1$-$C_4$-Alkylgruppe steht; |

(IIc)

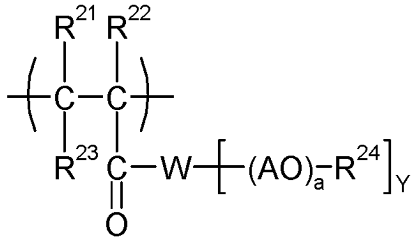

worin

| | |
|---|---|
| $R^{21}$, $R^{22}$ und $R^{23}$ | unabhängig voneinander für H oder eine unverzweigte oder verzweigte $C_1$-$C_4$-Alkylgruppe stehen; |
| W | für O, $NR^{25}$ oder N steht |
| Y | für 1 steht, wenn W = O oder $NR^{25}$, und für 2 steht, wenn W = N; |
| A | für $C_xH_{2x}$ mit x = 2, 3, 4 oder 5 oder $CH_2CH(C_6H_5)$, vorzugsweise für 2 oder 3, steht; |
| a | für eine ganze Zahl von 2 bis 350, vorzugsweise 5 bis 150, steht; |
| $R^{24}$ | für H oder eine unverzweigte oder verzweigte $C_1$-$C_4$-Alkylgruppe steht; und |
| $R^{25}$ | für H oder eine unverzweigte oder verzweigte $C_1$-$C_4$-Alkylgruppe steht; |

(IId)

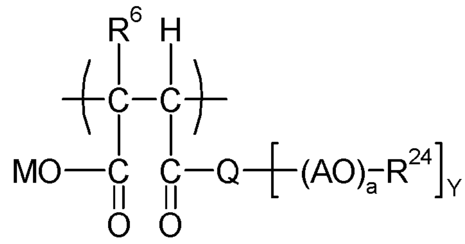

worin

- $R^6$ für H oder eine unverzweigte oder verzweigte $C_1$-$C_4$-Alkylgruppe steht;
- Q für $NR^{10}$, N oder O steht;
- V für 1 steht, wenn W = O oder $NR^{10}$ und für 2 steht, wenn W = N;
- $R^{10}$ für H oder eine unverzweigte oder verzweigte $C_1$-$C_4$-Alkylgruppe steht; und
- A für $C_xH_{2x}$ mit x = 2, 3, 4 oder 5, oder $CH_2C(C_6H_5)H$, vorzugsweise für 2 oder 3, steht;
- $R^{24}$ für H oder eine unverzweigte oder verzweigte $C_1$-$C_4$-Alkylgruppe steht;
- M für H oder ein Kationäquivalent steht; und
- a für eine ganze Zahl von 2 bis 350, vorzugsweise 5 bis 150, steht.

Besonders bevorzugt handelt es sich bei der Struktureinheit nach Formel Ia um eine Methacrylsäure- oder Acrylsäure-Einheit, bei der Struktureinheit nach Formel Ic um eine Maleinsäureanhydrid-Einheit und bei der Struktureinheit nach Formel Id um eine Maleinsäure- oder eine Maleinsäuremonoester-Einheit.

Soweit die Monomere (I) Phosphorsäureester oder Phosphonsäureester sind, können sie auch die entsprechenden Di- und Triester sowie den Monoester der Diphosphorsäure umfassen. Diese entstehen im Allgemeinen bei der Veresterung von organischen Alkoholen mit Phosphorsäure, Polyphosphorsäure, Phosphoroxiden, Phosphorhalogeniden oder Phosphoroxyhalogeniden bzw. den entsprechenden Phosphonsäureverbindungen neben dem Monoester in unterschiedlichen Anteilen, beispielsweise 5-30 Mol-% Diester und 1-15 Mol-% Triester sowie 2-20 Mol-% des Monoesters der Diphosphorsäure.

Vorzugsweise weist das Kammpolymer als Polyether-Seitenkette auf:

(a) mindestens eine Struktureinheit der Formel (IIa), worin $R^{10}$ und $R^{12}$ für H stehen, $R^{11}$ für H oder $CH_3$ steht, E und G gemeinsam für eine chemische Bindung stehen, A für $C_xH_{2x}$ mit x = 2 und/oder 3, a für 3 bis 150 steht, und $R^{13}$ für H oder eine unverzweigte oder verzweigte $C_1$-$C_4$-Alkylgruppe steht; und/oder

(b) mindestens eine Struktureinheit der Formel (IIb), worin $R^{16}$ und $R^{18}$ für H stehen, $R^{17}$ für H oder $CH_3$ steht, E für eine unverzweigte oder verzweigte $C_1$-$C_6$-Alkylengruppe steht, A für $C_xH_{2x}$ mit x = 2 und/oder 3 steht, L für $C_xH_{2x}$ mit x = 2 und/oder 3 steht, a für eine ganze Zahl von 2 bis 150 steht, d für eine ganze Zahl von 1 bis 150 steht, $R^{19}$ für H oder eine unverzweigte oder verzweigte $C_1$-$C_4$-Alkylgruppe steht, und $R^{20}$ für H oder eine unverzweigte oder verzweigte $C_1$-$C_4$-Alkylgruppe steht; und/oder

(c) mindestens eine Struktureinheit der Formel (IIc), worin $R^{21}$ und $R^{23}$ für H stehen, $R^{22}$ für H oder $CH_3$ steht, A für $C_xH_{2x}$ mit x = 2 und/oder 3 steht, a für eine ganze Zahl von 2 bis 150 steht, und $R^{24}$ für H oder eine unverzweigte oder verzweigte $C_1$-$C_4$-Alkylgruppe steht; und/oder

(d) mindestens eine Struktureinheit der Formel (IId), worin $R^6$ für H steht, Q für O steht, $R^7$ für $(C_nH_{2n})$-O-$(AO)_a$-$R^9$ steht, n für 2 und/oder 3 steht, A für $C_xH_{2x}$ mit x = 2 und/oder 3, a für eine ganze Zahl von 1 bis 150 steht und $R^9$ für H oder eine unverzweigte oder verzweigte $C_1$-$C_4$-Alkylgruppe steht.

Besonders bevorzugt handelt es sich bei der Struktureinheit nach Formel IIa um eine alkoxylierte Isoprenyl-, alkoxylierte Hydroxybutylvinylether-, alkoxylierte (Meth)allylalkohol-, oder um eine vinylierte Methylpolyalkylenglykol-Einheit, jeweils vorzugsweise mit einem arithmetischen Mittel von 2 bis 350 Oxyalkylengruppen.

Vorzugsweise umfasst das Kammpolymer mindestens eine Struktureinheit der Formel (IIa) und/oder (IIc), insbesondere der Formel (IIa).

Neben den Struktureinheiten der Formeln (I) und (II) kann das polymere Dispergiermittel auch weitere Struktureinheiten enthalten, die sich von radikalisch polymerisierbaren Monomeren ableiten, wie Hydroxyethyl(meth)acrylat, Hydroxy-propyl(meth)acrylat, (Meth)acrylamid, $(C_1$-$C_4)$-alkyl(meth)acrylate, Styrol, Styrolsulfonsäure, 2-Acrylamido-2-methylpropansulfonsäure, (Meth)allylsulfonsäure, Vinylsulfonsäure, Vinylacetat, Acrolein, N-Vinylformamid, Vinylpyrrolidon, (Meth)allylalkohol, Isoprenol, 1-Butylvinylether, Isobutylvinylether, Aminopropyvinylether, Ethylenglykolmonovinylether, 4-Hydroxybutylmonovinylether, (Meth)acrolein, Crotonaldehyd, Dibutylmaleat, Dimethylmaleat, Diethylmaleat, Dipropylmaleat, etc.

Die Herstellung der Kammpolymere, welche die Struktureinheiten (I) und (II) enthalten, erfolgt in üblicher Weise, beispielsweise durch radikalische Polymerisation. Sie ist z. B. beschrieben in EP0894811, EP1851256, EP2463314, EP0753488.

Vorzugsweise weist das Kammpolymer Einheiten der Formeln (I) und (II), insbesondere der Formeln (Ia) und (IIa) auf.

Vorzugsweise weist das Kammpolymer Struktureinheiten der Formeln (Ia) und (IIc) auf.

Vorzugsweise weist das Kammpolymer Struktureinheiten der Formeln (Ic) und (IIa) auf.

Vorzugsweise weist das Kammpolymer Struktureinheiten der Formeln (Ia), (Ic) und (IIa) auf.

Vorzugsweise ist das Kammpolymer aufgebaut aus (i) anionischen oder anionogenen Struktureinheiten, die abgeleitet sind von Acrylsäure, Methacrylsäure, Maleinsäure, Hydroxyethylacrylatphosphorsäureester, und/oder Hydroxyethylmethacrylatphosphorsäureester, Hydroxyethylacrylat-Phosphorsäurediester, und/oder Hydroxyethylmethacrylat-Phosphorsäurediester und (ii) Struktureinheiten mit Polyetherseitenketten, wobei die Struktureinheiten abgeleitet sind von $C_1$-$C_4$-Alkyl-polyethylenglykolacrylsäureester, Polyethylenglykolacrylsäureester, $C_1$-$C_4$-Alkyl-polyethylenglykolmethacrylsäureester, Polyethylenglykolmethacrylsäureester, $C_1$-$C_4$-Alkylpolyethylenglykolacrylsäureester, Polyethylenglykolacrylsäureester, Vinyloxy-$C_2$-$C_4$-alkylenpolyethylenglykol, Vinyloxy-$C_2$-$C_4$-alkylenpolyethylenglykol-$C_1$-$C_4$-alkylether, Allyloxypolyethylenglykol, Allyloxy-polyethylenglykol-$C_1$-$C_4$-alkylether, Methallyloxypolyethylen-glykol, Methallyloxypolyethylenglykol-$C_1$-$C_4$-alkylether, Isoprenyloxypolyethylenglykol und/oder Isoprenyloxypolyethylenglykol-$C_1$-$C_4$-alkylether

Vorzugsweise ist das Kammpolymer aufgebaut aus Struktureinheiten (i) und (ii), die abgeleitet sind von

(i) Hydroxyethylacrylatphosphorsäureester und/oder Hydroxyethylmethacrylatphosphorsäureester und (ii) $C_1$-$C_4$-Alkyl-polyethylenglykolacrylsäureester und/oder $C_1$-$C_4$-Alkyl-polyethylenglykolmethacrylsäureester; oder

(i) Acrylsäure und/oder Methacrylsäure und (ii) $C_1$-$C_4$-Alkyl-polyethylenglykolacrylsäureester und/oder $C_1$-$C_4$-Alkyl-polyethylenglykolmethacrylsäureester; oder

(i) Acrylsäure Methacrylsäure und/oder Maleinsäure und (ii) Vinyloxy-$C_2$-$C_4$-alkylen-polyethylenglykol, Allyloxy-polyethylenglykol, Methallyloxy-polyethylenglykol und/oder Isoprenyloxy-polyethylenglykol.

Vorzugsweise ist das Kammpolymer aufgebaut aus Struktureinheiten (i) und (ii), die abgeleitet sind von

(i) Hydroxyethylmethacrylatphosphorsäureester und (ii) $C_1$-$C_4$-Alkyl-polyethylenglykolmethacrylsäureester oder Polyethylenglykolmethacrylsäureester; oder

(i) Methacrylsäure und (ii) $C_1$-$C_4$-Alkyl-polyethylenglykolmethacrylsäureester oder Polyethylenglykolmethacrylsäureester; oder

(i) Acrylsäure und Maleinsäure und (ii) Vinyloxy-$C_2$-$C_4$-alkylen-polyethylenglykol oder

(i) Acrylsäure und Maleinsäure und (ii) Isoprenyloxy-polyethylenglykol oder

(i) Acrylsäure und (ii) Vinyloxy-$C_2$-$C_4$-alkylen-polyethylenglykol oder

(i) Acrylsäure und (ii) Isoprenyloxy-polyethylenglykol oder

(i) Acrylsäure und (ii) Methallyloxy-polyethylenglykol oder

(i) Maleinsäure und (ii) Isoprenyloxy-polyethylenglykol oder

(i) Maleinsäure und (ii) Allyloxy-polyethylenglykol oder

(i) Maleinsäure und (ii) Methallyloxy-polyethylenglykol

Vorzugsweise beträgt das Molverhältnis der Struktureinheiten (I) : (II) 1 : 4 bis 15 : 1, insbesondere 1 : 1 bis 10 : 1.

Vorzugsweise ist das Molgewicht der Polyether-Seitenketten >500 g/mol, bevorzugt >3000 g/mol und <8000 g/mol, vorzugsweise <6000 g/mol.

Vorzugsweise liegt das Molgewicht der Polyether-Seitenketten im Bereich von 2000-8000 g/mol, insbesondere 4000-6000 g/mol, liegt.

In einer Ausführungsform ist das Kammpolymer ein Polykondensationsprodukt, das Struktureinheiten (III) und (IV) umfasst:

(III)

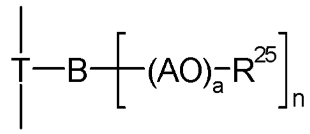

worin

- T für einen substituierten oder unsubstituierten Phenylrest, substituierten oder unsubstituierten Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;
- n für 1 oder 2 steht;
- B für N, NH oder O steht, mit der Maßgabe, dass n für 2 steht, wenn B für N steht und der Maßgabe, dass n für 1 steht, wenn B für NH oder O steht;
- A für $C_xH_{2x}$ mit x = 2, 3, 4 oder 5 oder $CH_2CH(C_6H_5)$ steht;
- a für eine ganze Zahl von 1 bis 300, vorzugsweise 5 bis 150, steht;
- $R^{25}$ für H, einen verzweigten oder unverzweigten $C_1$- bis $C_{10}$-Alkylrest, $C_5$- bis $C_8$-Cycloalkylrest, Arylrest, oder Heteroarylrest mit 5 bis 10 Ringatomen, wovon 1 oder 2 Atome Heteroatome sind, die ausgewählt sind unter N, O und S, steht;

wobei die Struktureinheit (IV) ausgewählt ist unter den Struktureinheiten (IVa) und (IVb)

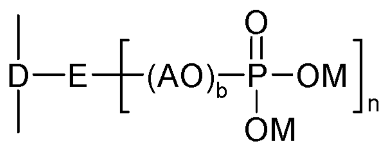

(IVa)

worin

- D für einen substituierten oder unsubstituierten Phenylrest, substituierten oder unsubstituierten Naphthylrest oder für einen substituierten oder unsubstituierten heteroaromatischen Rest mit 5 bis 10 Ringatomen, wovon 1 oder 2 Atome Heteroatome sind, die ausgewählt sind unter N, O und S, steht;
- E für N, NH oder O steht, mit der Maßgabe, dass m für 2 steht, wenn E für N steht und der Maßgabe, dass m für 1 steht, wenn E für NH oder O steht;
- A für $C_xH_{2x}$ mit x = 2, 3, 4 oder 5 oder $CH_2CH(C_6H_5)$ steht;
- b für eine ganze Zahl von 1 bis 300, vorzugsweise 1 bis 50, steht;
- M unabhängig voneinander für H, ein Kationäquivalent steht; und

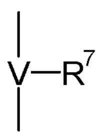

(IVb)

worin

- V für einen substituierten oder unsubstituierten Phenylrest oder substituierten oder unsubstituierten Naphthylrest steht, wobei V gegebenenfalls durch 1 oder zwei Reste substituiert ist, die unabhängig voneinander ausgewählt sind unter $R^8$, OH, $OR^8$, $(CO)R^8$, COOM, $COOR^8$, $SO_3R^8$ und $NO_2$, vorzugsweise OH, ; $OC_1$-$C_4$-Alkyl und $C_1$-$C_4$-Alkyl;

$R^7$ für COOM, $OCH_2COOM$, $SO_3M$ oder $OPO_3M_2$ steht;
M für H oder ein Kationäquivalent steht; wobei die erwähnten Phenyl-, Naphthyl- oder heteroaromatischen Reste gegebenenfalls durch 1 oder zwei Reste substituiert sind, die ausgewählt sind unter $R^8$, OH, $OR^8$, $(CO)R^8$, COOM, $COOR^8$, $SO_3R^8$ und $NO_2$; und
$R^8$ für $C_1$-$C_4$-Alkyl, Phenyl, Naphthyl, Phenyl-$C_1$-$C_4$-alkyl oder $C_1$-$C_4$-Alkylphenyl steht.

In der allgemeinen Formel (III) steht a vorzugsweise für eine ganze Zahl von 1 bis 300 und insbesondere 5 bis 150, und in der allgemeinen Formel (IV) steht b vorzugsweise für eine ganze Zahl von 1 bis 300, insbesondere 1 bis 50 und besonders bevorzugt 1 bis 10. Weiterhin können die Reste der allgemeinen Formeln (III) oder (IV) unabhängig voneinander jeweils die gleiche Kettenlänge besitzen, wobei a und b jeweils durch eine Zahl repräsentiert wird. Es wird dabei in der Regel zweckmäßig sein, wenn jeweils Mischungen mit unterschiedlichen Kettenlängen vorliegen, so dass die Reste der Struktureinheiten im Polykondensationsprodukt für a und unabhängig für b unterschiedliche Zahlenwerte aufweisen.

Vorzugsweise steht in Formel III T für einen substituierten oder unsubstituierten Phenylrest oder Naphthylrest, A für $C_xH_{2x}$ mit x = 2 und/oder 3 steht, a für eine ganze Zahl von 1 bis 150 steht, und $R^{25}$ für H, oder einen verzweigten oder unverzweigten $C_1$-bis $C_{10}$-Alkylrest steht.

Vorzugsweise steht in Formel IVa D für einen substituierten oder unsubstituierten Phenylrest oder Naphthylrest, E für NH oder O steht, A für $C_xH_{2x}$ mit x = 2 und/oder 3 steht, und b für eine ganze Zahl von 1 bis 150 steht.

Vorzugsweise stehen T und/oder D für Phenyl oder Naphthyl, das durch 1 oder 2 $C_1$-$C_4$-Alkyl-, Hydroxy- oder 2 $C_1$-$C_4$-Alkoxygruppen substituiert ist.

Vorzugsweise steht V für Phenyl oder Naphthyl, das durch 1 oder 2 $C_1$-$C_4$-Alkyl, OH, $OCH_3$ oder COOM substituiert ist, und $R^7$ für COOM oder $OCH_2COOM$.

Die Struktureinheiten T und D in den allgemeinen Formeln (III) und (IV) des Polykondensationsprodukts sind vorzugsweise abgeleitet von Phenyl, 2-Hydroxyphenyl, 3-Hydroxyphenyl, 4-Hydroxyphenyl, 2-Methoxyphenyl, 3-Methoxyphenyl, 4-Methoxyphenyl, Naphthyl, 2-Hydroxynaphthyl, 4-Hydroxynaphthyl, 2-Methoxynaphthyl, 4-Methoxynaphthyl, Phenoxyessigsäure, Salicylsäure, vorzugsweise von Phenyl, wobei T und D unabhängig voneinander gewählt werden können und auch jeweils von einer Mischung der genannten Reste abgeleitet sein können. Die Gruppen B und E stehen unabhängig voneinander vorzugsweise für O. Alle Struktureinheiten A können sowohl innerhalb einzelner Polyetherseitenketten, als auch zwischen verschiedenen Polyetherseitenketten gleich oder verschieden sein. A steht in einer besonders bevorzugten Ausführungsform für $C_2H_4$.

Es ist vorteilhaft, über einen relativ hohen Anteil an Struktureinheiten (IV) im Polykondensationsprodukt zu verfügen, da eine verhältnismäßig hohe negative Ladung der Polymere einen guten Einfluss auf die Stabilität der wässrigen kolloid-dispersen Zubereitung hat. Das Molverhältnis der Struktureinheiten (IVa):(IVb), wenn beide enthalten sind, beträgt typischerweise 1 : 10 bis 10 : 1 und vorzugsweise 1 : 3 bis 3 : 1.

In bestimmten Ausführungsformen umfasst das Polykondensationsprodukt eine weitere Struktureinheit (V) der Formel

(V) 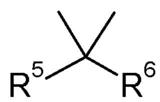

worin
$R^5$ und $R^6$ gleich oder verschieden sein können und für H, $CH_3$, COOH oder eine substituierte oder unsubstituierte Phenyl- oder Naphthylgruppe oder für eine substituierte oder unsubstituierte heteroaromatische Gruppe mit 5 bis 10 Ringatomen, wovon 1 oder 2 Atome Heteroatome sind, die ausgewählt sind unter N, O und S.

$R^5$ und $R^6$ können gleich oder verschieden sein und für H, $CH_3$, oder COOH, insbesondere für H oder einer der Reste $R^5$ und $R^6$ für H und der andere für $CH_3$, stehen. Typischerweise sind $R^5$ und $R^6$ in Struktureinheit (V) gleich oder verschieden und stehen für H, COOH und/oder Methyl. Ganz besonders bevorzugt ist H.

Die Polykondensate werden typischerweise nach einem Verfahren hergestellt, bei dem man die Verbindungen miteinander umsetzt, die den Struktureinheiten (III), (IV) und (V) zugrundeliegen. Die Herstellung der Polykondensate ist beispielsweise beschrieben in WO 2006/042709 und WO 2010/026155.

Vorzugsweise ist das Monomer mit einer Ketogruppe ein Aldehyd oder Keton. Beispiele für Monomere der Formel (V) sind Formaldehyd, Acetaldehyd, Aceton, Glyoxylsäure und/oder Benzaldehyd. Formaldehyd ist bevorzugt.

Im allgemeinen weist das Polykondensationsprodukt ein gewichtsmittleres Molekulargewicht von 5.000 g/mol bis 200.000 g/mol, vorzugsweise 10.000 bis 100.000 g/mol und besonders bevorzugt 15.000 bis 55.000 g/mol auf.

Vorzugsweise beträgt das Molverhältnis der Struktureinheiten (III) : (IV) 4 : 1 bis 1 : 15, insbesondere 2 : 1 bis 1 : 10,.

Vorzugsweise beträgt das Molverhältnis der Struktureinheiten (III + IV) : (V) 2:1 bis 1:3, insbesondere 1:0,8 bis 1:2,.

In bevorzugte Ausführungsformen ist das Kammpolymer aufgebaut aus Struktureinheiten der Formeln (III) und (IV), worin T und D für Phenyl oder Naphthyl steht, wobei das Phenyl oder Naphthyl die gegebenenfalls durch 1 oder 2 $C_1$-$C_4$-Alkyl-, Hydroxy- oder 2 $C_1$-$C_4$-Alkoxygruppen substituiert ist, B und E für O stehen, A für $C_xH_{2x}$ mit x = 2 steht, a für 3 bis 150, insbesondere 10 bis 150, steht und b für 1, 2 oder 3 steht.

In bestimmten Ausführungsformen verwendet man als polymeres Dispergiermittel ein Homopolymer, das Sulfo- und/oder Sulfonatgruppen-enthaltende Einheiten oder Carbonsäure- und/oder Carboxylatgruppen-enthaltende Einheiten, oder ein Copolymer, das Sulfo- und/oder Sulfonatgruppen-enthaltende Einheiten und Carbonsäure- und/oder Carboxylatgruppen-enthaltende Einheiten umfasst.

Z. B. sind die Sulfo- und/oder Sulfonatgruppen-enthaltenden Einheiten Vinylsulfonsäure- , Allylsulfonsäure-, Methallylsulfonsäure-, 4-Vinylphenylsulfonsäureeinheiten oder Struktureinheiten der Formel (VI)

(VI)

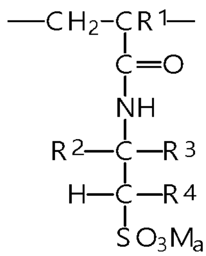

, worin

| | |
|---|---|
| $R^1$ | für H oder $CH_3$ steht, |
| $R^2$, $R^3$ | und $R^4$ unabhängig voneinander für H oder geradkettiges oder verzweigtes $C_1$-$C_6$-Alkyl oder $C_6$-$C_{14}$-Aryl stehen, |
| M | für H oder ein Kation, insbesondere ein Metallkation, vorzugsweise ein einwertiges oder zweiwertiges Metallkation, oder ein Ammoniumkation steht, |
| a | für 1 oder 1/Wertigkeit des Kations, insbesondere für 1/2 oder 1 steht. |

Vorzugsweise sind die Sulfo- und/oder Sulfonatgruppen-enthaltenden Einheiten Vinylsulfonsäure-, Methallylsulfonsäure- und/oder 2-Acrylamido-2-methylpropylsulfon- säureeinheiten, insbesondere 2-Acrylamido-2-methylpropylsulfon-säureeinheiten.

Vorzugsweise sind die Carbonsäure- und/oder Carboxylatgruppen-enthaltenden Einheiten Acrylsäure-, Methacrylsäure-, 2-Ethylacrylsäure-, Vinylessigsäure-, Crotonsäure-, Maleinsäure-, Fumarsäure-, Itaconsäure- und/oder Citraconsäureeinheiten und insbesondere Acrylsäure- und/oder Methacrylsäureeinheiten.

Das Molekulargewicht Mw des Copolymers liegt vorzugsweise im Bereich von 1.000 bis 50.000, bestimmt mittels wässriger Gelpermeationschromatographie.

In besonders geeigneten Ausführungsformen ist das Dispergiermittel ausgewählt unter:

Copolymeren, die Struktureinheiten der Formeln (Ia) und (IIa) umfassen, insbesondere Copolymeren, die Struktureinheiten umfassen, die abgeleitet sind von Acrylsäure und/oder Methacrylsäure und ethoxylierten Hydroxyalkylvinylethern, wie ethoxyliertem Hydroxybutyl-vinylether;

Copolymeren, die Struktureinheiten der Formeln (Ia), (Id) und (IIa) umfassen, insbesondere Copolymeren, die Struktureinheiten umfassen, die abgeleitet sind von Acrylsäure und/oder Methacrylsäure, Maleinsäure und ethoxylierten Hydroxyalkylvinylethern, wie ethoxyliertem Hydroxybutylvinylether;

Copolymeren, die Struktureinheiten der Formeln (Ia) und (IIc) umfassen, insbesondere Copolymeren, die Struktureinheiten umfassen, die abgeleitet sind von Acrylsäure und/oder Methacrylsäure und Estern der Acrylsäure oder Methacrylsäure mit Polyethylenglykol oder Polyethylenglykol, das mit $C_1$-$C_{12}$-Alkyl endverschlossen ist;

Polykondensationsprodukten, die Struktureinheiten (III), (IVa) und (V) umfassen, insbesondere Kondensationsprodukten aus ethoxyliertem Phenol, Phenoxy-$C_2$-$C_6$-alkanolphosphat und Formaldehyd;

Homopolymeren, die Sulfo- und/oder Sulfonatgruppen-enthaltende Einheiten oder Carbonsäure- und/oder Carboxylatgruppen-enthaltende Einheiten umfassen;

Copolymeren, die Sulfo- und/oder Sulfonatgruppen-enthaltende Einheiten und Carbonsäure- und/oder Carboxylatgruppen-enthaltende Einheiten umfassen; und/oder

Polyacrylsäure;

und den Salzen davon und Kombinationen von zwei oder mehreren dieser Dispergiermittel.

In einer Ausführungsform verwendet man zusätzlich mindestens ein weiteres Dispergiermittel verwendet, das ausgewählt ist unter Lignosulfonaten, Melamin-Formaldehydsulfonat-Kondensaten, β-Naphthalinsulfonsäure-Kondensaten, Phenolsulfonsäure-Kondensaten und sulfonierten Keton-Formaldehyd-Kondensaten.

Das Molverhältnis der Struktureinheiten (III) : (IV) beträgt typischerweise 4 : 1 bis 1 : 15 und vorzugsweise 2 : 1 bis 1 : 10.

In einer bevorzugten Ausführungsform enthält das Polykondensationsprodukt eine weitere Struktureinheit (V), die durch die folgende Formel repräsentiert wird:

(V) 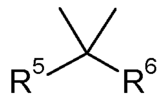

worin

- $R^5$ für H, $CH_3$, COOH oder substituiertes oder unsubstituiertes Phenyl oder substituiertes oder unsubstituiertes Naphthyl steht;
- $R^6$ H, $CH_3$, COOH oder substituiertes oder unsubstituiertes Phenyl oder substituiertes oder unsubstituiertes Naphthyl steht.

Das Kammpolymer kann auch in Form seiner Salze, wie beispielsweise des Natrium-, Kalium-, organischen Ammonium-, Ammonium- und/oder Calciumsalzes, vorzugsweise als Natrium- und/oder Calciumsalz, vorliegen.

Das Molgewicht des polymeren Dispergiermittels, bestimmt mittels Gelchromatographie mit Polystyrol als Standard, liegt im Allgemeinen im Bereich von 5.000 bis 100.000. Das Molgewicht der Seitenketten liegt dabei im Allgemeinen im Bereich von 1.000 bis 10.000.

Die Ladungsdichte der Polymere liegt im Allgemeinen im Bereich von 500 μeq/g bis 1.500 μeq/g.

Bevorzugte polymere Dispergiermittel sind:

Copolymere, die Struktureinheiten der Formeln (Ia) und (IIa) umfassen, insbesondere Copolymere, die Struktureinheiten umfassen, die abgeleitet sind von Acrylsäure und/oder Methacrylsäure und ethoxylierten Hydroxyalkylvinylethern, wie ethoxyliertem Hydroxybutyl-vinylether;

Copolymere, die Struktureinheiten der Formeln (Ia), (Id) und (IIa) umfassen, insbesondere Copolymere, die Struktureinheiten umfassen, die abgeleitet sind von Acrylsäure und/oder Methacrylsäure, Maleinsäure und ethoxylierten Hydroxyalkylvinylethern, wie ethoxyliertem Hydroxybutylvinylether;

Copolymere, die Struktureinheiten der Formeln (Ia) und (IIc) umfassen, insbesondere Copolymere, die Struktureinheiten umfassen, die abgeleitet sind von Acrylsäure und/oder Methacrylsäure und Estern der Acrylsäure oder Methacrylsäure mit Polyethylenglykol oder Polyethylenglykol, das mit $C_1$-$C_{12}$-Alkyl endverschlossen ist;

Polykondensationsprodukten, die Struktureinheiten (III), (IVa) und (V) umfassen, insbesondere Kondensationsprodukte aus ethoxyliertem Phenol, Phenoxy-$C_2$-$C_6$-alkanolphosphat und Formaldehyd;

Homopolymeren, die Sulfo- und/oder Sulfonatgruppen-enthaltende Einheiten oder Carbonsäure- und/oder Carboxylatgruppen-enthaltende Einheiten umfassen;

Copolymeren, die Sulfo- und/oder Sulfonatgruppen-enthaltende Einheiten und Carbonsäure- und/oder Carboxylatgruppen-enthaltende Einheiten umfassen; und/oder

Polyacrylsäure;

und die Salze davon und Kombinationen von zwei oder mehreren dieser Dispergiermittel.

In Kontakt bringen des mineralischen Bestandteils mit dem wasserlöslichen polymeren Dispergiermittel

Zur Herstellung der Calciumsilikathydrat enthaltenden Zusammensetzung bringt man den mineralischen Bestandteil in einem wässrigen Medium mit mindestens einem wasserlöslichen polymeren Dispergiermittel in Kontakt.

Für das in Kontakt bringen mit dem polymeren Dispergiermittel kann der mineralische Bestandteil in Form einer Suspension oder als Trockenpulver eingesetzt werden. Das polymere Dispergiermittel wird dann auf einmal oder in zwei oder mehreren Portionen zu der Suspension, welche den mineralischen Bestandteil enthält, gegeben, entweder als Feststoff oder in Form einer wässrigen Lösung. Vorzugsweise wird jedoch der mineralische Bestandteil auf einmal oder in zwei oder mehreren Portionen als Feststoff oder als wässrige Suspension in eine wässrige Lösung des polymeren Dispergiermittels gegeben.

In einer Ausführungsform liegt das Gewichtsverhältnis des mineralischen Bestandteils (berechnet als Trockenkomponente) zu polymerem Dispergiermittel im Bereich von 15 : 1 bis 1 : 2, insbesondere im Bereich von 10 : 1 bis 1 : 1,5, insbesondere bevorzugt im Bereich von 5 : 1 bis 1 : 1. In einer Ausführungsform liegt das Gewichtsverhältnis von mineralischem Bestandteil (berechnet als Trockenkomponente) zu Wasser im Bereich von 3 : 1 bis 1 : 20, insbesondere im Bereich 1 : 1 bis 1 : 10, insbesondere bevorzugt 2 : 3 bis 1 : 5.

Die Bestimmung der Trockenkomponente des mineralischen Bestandteils erfolgt durch Trocknen des Materials bei 105 ° C im Laborofen bis zur Gewichtskonstanz und dem sich daraus ergebenen Trocknungsverlustes an Gewicht.

Der Wassergehalt der Suspension (ermittelt durch Trocknung der Suspension bei 105 ° C bis zur Gewichtskonstanz) beim in Kontaktbringen des mineralischen Bestandteils mit dem polymeren Dispergiermittel liegt geeigneterweise im Bereich von 25 Gew.-% bis 95 Gew.-%, insbesondere im Bereich 50 Gew.-% bis 90 Gew.-%, insbesondere bevorzugt 60 Gew.-% bis 80 Gew.-%.

Gewünschtenfalls kann man das Verfahren unter Zusatz von Portland-Zement, Portland-Zementklinker, und/oder einem latent hydraulischen Bindemittel durchführten, wobei der Massenanteil an Portland-Zement, Portland-Zementklinker und/oder latent hydraulischem Bindemittel, bezogen auf die Summe der Menge an mineralischem Bestandteil bei 0,01 bis 10 Gew.-%, bevorzugt bei 0,01 bis 5 Gew.-%, liegt. Der Zusatz kann vor dem in Kontakt bringen mit dem polymeren Dispergiermittel erfolgen, oder nach der mechanischen Zerkleinerung des mineralischen Bestandteils.

In bevorzugten Ausführungsformen wird das Verfahren im Wesentlichen ohne Zusatz anderer Bestandteile und insbesondere im Wesentlichen ohne Zusatz von Portland-Zement, Portland-Zementklinker und/oder Ettringit durchgeführt.

Das in Kontakt bringen des mineralischen Bestandteils mit dem polymeren Dispergiermittel erfolgt unter Eintrag von kinetischer Energie, durch Vermahlen. Hierzu sind praktisch alle dem Fachmann bekannten Einrichtungen geeignet.

In einer bevorzugten Ausführungsform findet das in Kontakt bringen unter Einbringen von Scherenergie statt, wobei mehr als 50 kWh, insbesondere mehr als 200 kWh, bevorzugt mehr als 400 kWh, besonders 100 bis 5.000 kWh, insbesondere 200 bis 3.000 kWh, insbesondere bevorzugt 300 bis 1.000 kWh Scherenergie pro Tonne der Zusammensetzung eingebracht werden.

Die Scherenergie ist definiert als Wirkarbeit WW, die sich aus der für die Mahlung aufgewendeten Scherleistung PW und der Mahldauer t entsprechend nachfolgender Gleichung (1) ergibt:

$$\text{Gleichung (1): } W_W = P_W \cdot t$$

Die Scherleistung, die dabei auf die Suspension einwirkt, ergibt sich aus der Differenz zwischen Wirkleistung $P_p$ (Leistungsaufnahme des Geräts während der Vermahlung der Suspension) und der Nullleistung $P_o$ (Leistungsaufnahmen des Geräts im Leerlauf ohne Suspension und ggf. ohne Mahlkugeln z..B. im Falle einer Perlmühle, Kugelmühle oder Zahnkolloidmühle) mittels nachfolgender Gleichung (2):

$$\text{Gleichung (2): } P_W = P_P - P_0$$

Die Nullleistung (Gleichung (3a)) bzw. die Wirkleistung (Gleichung (3b)) ergeben sich aus der Wirkspannung U und der Wirkstromstärke I, die mittels Strommessgerät an Gerät im Betrieb gemessen wird:

$$\text{Gleichung (3a): } P_0 = U_0 \cdot I_0 \cdot \cos\phi;\ \cos\phi = 1$$

$$\text{Gleichung (3b): } P_P = U_P \cdot I_P \cdot \cos\phi;\ \cos\phi = 1$$

Das Verhältnis von Wirkleistung $P_p$ zur Scheinleistung $P_s$ des Geräts wird durch cos $\phi$ nach Gleichung (4)

beschrieben:

$$\text{Gleichung (4): } \cos \phi = P_P / P_S$$

Da die Scheinleistung sehr gerätespezifisch ist und die Wirkleistung einfach gemessen werden kann (durch Messung der Wirkspannung und der Wirkstromstärke) wird zur Vereinfach der cos $\phi$ = 1 angenommen.

Bevorzugt sind daher Verfahren, die eine hohe Scherenergie einbringen. Insbesondere kann das Einbringen von Scherenergie durch Vermahlen, wie in einer Zahnkolloidmühle, Perlmühle, Kugelmühle oder vorzugsweise Rührwerkskugelmühle, durchgeführt werden. Die Rührwerkskugelmühle umfasst eine die Mahlkörper enthaltende Mahlkammer, einem Stator und einem Rotor, welche in der Mahlkammer angeordnet sind. Weiterhin bevorzugt umfasst die Rührwerkskugelmühle eine Mahlgut-Einlassöffnung und eine Mahlgut-Auslassöffnung zum Zuführen und Abführen von Mahlgut in die bzw. aus der Mahlkammer, sowie einer in der Mahlkammer stromauf von der Auslassöffnung angeordneten Mahlkörper-Trenneinrichtung, die dazu dient, in dem Mahlgut mitgeführte Mahlkörper aus dem Mahlgut abzutrennen, bevor dieses durch die Auslassöffnung aus dem Mahlraum abgeführt wird.

Um die in das Mahlgut in der Mahlkammer eingetragene mechanische Mahlleistung zu steigern, sind bevorzugt am Rotor und/oder am Stator Stifte vorhanden, die in den Mahlraum ragen. Im Betrieb wird somit einerseits auf direktem Wege durch Stöße zwischen dem Mahlgut und den Stiften ein Beitrag zur Mahlleistung erbracht. Andererseits erfolgt ein weiterer Beitrag zur Mahlleistung auf indirektem Wege, durch Stöße zwischen den Stiften und den im Mahlgut mitgeführten Mahlkörpern und den dann wiederum erfolgenden Stößen zwischen dem Mahlgut und den Mahlkörpern. Schließlich tragen auch noch auf das Mahlgut einwirkende Scherkräfte und Dehnkräfte zur Zerkleinerung der suspendierten Mahlgutpartikel bei.

In einer Ausführungsform erfolgt das in Kontakt bringen mit dem polymeren Dispergiermittel in zwei Stufen. In der ersten Stufe erfolgt das in Kontakt bringen so lange, bis die Teilchengröße d(99) des mineralischen Bestandteils ≤ 300 μm ist und insbesondere im Bereich von 0,5 bis 300 μm liegt. Dies kann unter Verwendung einer Vorrichtung erfolgen, die ausgewählt ist unter einer Mahlvorrichtung, einem Ultraschallgerät, einem Rotor-Stator-Mischsystem, und einer Dissolver-Scheibe.

In der zweiten Stufe erfolgt das in Kontakt bringen so lange, bis der mineralische Bestandteil eine d(50)-Teilchengröße von ≤ 400 nm, bevorzugt ≤ 300 nm, besonders bevorzugt ≤ 200 nm, bestimmt mittels statischer Lichtstreuung, aufweist. Dies erfolgt unter Verwendung einer Mahlvorrichtung.

Es hat sich als zweckmäßig erwiesen, vor dem Einbringen von kinetischer Energie eine Ruhezeit der Suspension von 0,01 h bis 48 h, bevorzugt 4 h bis 24 h, besonders bevorzugt 6 h bis 16 h, eingehalten wird, während der die Suspension ohne Einwirkung von hoher Scherenergie, d.h. Scherenergien von < 50 kWh pro Tonne Suspension, in einem Rührkessel ruht bzw. gerührt wird, um eine Sedimentation zu unterbinden. Wenn das in Kontakt bringen mit dem polymeren Dispergiermittel in zwei Stufen erfolgt, kann die Ruhezeit vor der ersten Stufe oder zwischen den beiden Stufen erfolgen.

Vor, während oder nach dem in Kontaktbringen des mineralischen Bestandteils mit dem Dispergiermittel kann eine saure Verbindung mit einem Molekulargewicht von höchstens 200 g/mol, insbesondere 40 - 100 g/mol zugegeben werden. Vorzugsweise erfolgt die Zugabe der sauren Verbindung nach dem in Kontaktbringen des mineralischen Bestandteils mit dem Dispergiermittel erfolgt Die saure Verbindung ist z.B. ausgewählt unter Salpetersäure, Sulfaminsäure, Methansulfonsäure, Ameisensäure, Essigsäure, Schwefelsäure sowie Mischungen davon, bevorzugt Sulfaminsäure, Methansulfonsäure, Essigsäure sowie Mischungen davon. Geeigneterweise wird die Menge der sauren Verbindung so gewählt, dass sich unmittelbar nach der Säurezugabe (10 bis 60 Sekunden) bzw. nach vollständiger Homogenisierung ein pH-Wert der Suspension von 11,0 - 13,0, bevorzugt 11,4 - 12,5, besonders bevorzugt 11,8 - 12,4, ergibt.

<u>Baustoffmischung</u>

Die Erfindung betrifft auch eine Baustoffmischung, umfassend die erfindungsgemäße Calciumsilikathydrat enthaltende Zusammensetzung sowie gegebenenfalls ein hydraulisches oder latent hydraulisches Bindemittel, insbesondere Portland-Zement, Schlacke, vorzugsweise granulierte Hochofenschlacke, Flugasche, Silikamehl, Metakaolin, natürliche Puzzolane, kalzinierten Ölschiefer, Calciumsulfoaluminatzemente und/oder Calciumaluminatzemente.

Die erfindungsgemäße Baustoffmischung kann auch weitere Additive enthalten, die typischerweise auf dem Gebiet der Bauchemikalien verwendet werden, wie andere Erhärtungsbeschleuniger, Dispergiermittel, Verflüssiger, Wasserreduktionsmittel, Erstarrungsverzögerer, Entschäumer, Luftporenbildner, Verzögerer, schwindungsverringernde Mittel, redispergierbare Pulver, Frostschutzmittel und/oder Antiausblühmittel.

Geeignete andere Erhärtungsbeschleuniger sind Alkanolamine, bevorzugt Triisopropanolamin und/oder Tetrahydroxyethylethylendiamin (THEED). Vorzugsweise werden die Alkanolamine in einer Dosierung von 0,01 bis 2,5 Gew.-%, bezogen auf das Gewicht des hydraulischen Bindemittels, eingesetzt. Bei Verwendung von Aminen, insbesondere

Triisopropanolamin und Tetrahydroxyethylethylendiamin, können synergistische Effekte bezüglich der Frühfestigkeitsentwicklung von hydraulischen Bindemittelsystemen, insbesondere zementartigen Systemen, gefunden werden.

Weitere geeignete andere Erhärtungsbeschleuniger sind beispielsweise Calciumchlorid, Calciumformiat, Calciumnitrat, anorganische Karbonate (wie Natriumkarbonat, Kaliumkarbonat), 1,3-Dioxolan-2-on und 4-Methyl-1,3-dioxolan-2-on. Vorzugsweise werden Calciumformiat und Calciumnitrat in einer Dosierung von 0,1 bis 4 Ma.-% bezogen auf das hydraulische Bindemittel eingesetzt.

Geeignete Dispergiermittel, Verflüssiger, Wasserreduktionsmittel sind beispielsweise:

a) sulfonierte Melamin-Formaldehyd Kondensate, b) Lignosulfonate, c) sulfonierte Ketone-Formaldehyde Kondensate, d) sulfonierte Naphthalin-Formaldehyd Kondensate (BNS), e) Polycarboxylatether (PCE), f) nicht-ionische Copolymere zur Verlängerung der Verarbeitbarkeit einer zementären Mischung, die Zement und Wasser enthält, wobei das Copolymer Einheiten umfasst, die von wenigstens den folgenden Monomerkomponenten abgeleitet sind: Komponente A, nämlich ein ethylenisch ungesättigtes Carbonsäureestermonomer mit einer in der zementären Mischung hydrolysierbaren Einheit; und Komponente B, nämlich ein ethylenisch ungesättigtes Carbonsäureestermonomer oder Alkenylethermonomer, umfassend wenigstens eine Poly-$C_{2-4}$-oxyalkylenseitenkette mit 1 to 350 Oxyalkyleneinheiten oder g) Phosphonatgruppen-enthaltende Dispergiermittel der Formel $R-(OA)_n-N-[CH_2-PO(OM_2)_2]_2$, worin R für H oder einen gesättigten oder ungesättigten Kohlenwasserstoffrest, vorzugsweise einen $C_1$ bis $C_{15}$-Alkylrest steht;

A gleich oder verschieden sein kann und für Alkylene mit 2 bis 18 Kohlenstoffatomen, vorzugsweise für Ethylen und/oder Propylen, insbesondere Ethylen, steht;

n für 5 bis 500, vorzugsweise10 bis 200, insbesondere 10 bis 100 steht und M für H, ein Alkalimetall, 1/2 Erdalkalimetall und/oder ein Amin steht,

wobei jede Kombination der genannten Dispergiermittel a) bis g) umfasst ist.

Geeignete Erstarrungsverzögerer sind Zitronensäure, Weinsäure, Glukonsäure, Phosphonsäure, Aminotrimethylenphosphonsäure, Ethylendiaminotetra-(methylenphosphon)säure, Diethylentriaminopenta(methylen-phosphon) säure, jeweils einschließlich der jeweiligen Salze der Säuren, Pyrophosphate, Pentaborate, Metaborate und/oder Zucker (z. B. Glukose, Melassen) enthalten. Der Vorteil der Zugabe von Erstarrungsverzögerern besteht darin, dass die offene Zeit gesteuert und insbesondere gegebenenfalls verlängert werden kann. Vorzugsweise werden die Erstarrungsverzögerer in einer Dosierung von 0,01 Gew.-% bis 0,5 Gew.-%, bezogen auf das Gewicht des hydraulischen Bindemittels, vorzugsweise Zement, eingesetzt.

Die Calciumsilikathydrat enthaltende Zusammensetzung zeigt insbesondere eine überraschend starke Beschleunigungswirkung auf die Erhärtung von hydraulischen bzw. latent hydraulischen Bindemitteln, insbesondere Portland-Zement. Durch Verwendung der Calciumsilikathydrat enthaltenden Zusammensetzung lässt sich die Frühfestigkeit der hydraulisch bzw. latent hydraulisch abbindenden Bindemittel, insbesondere Portland-Zement, verbessern. Weiter besitzt die Zusammensetzung verbesserte anwendungstechnische Eigenschaften, wie eine niedrige Viskosität in den für die Anwendung relevanten Konzentrationsbereichen. Sie ist daher einfach zu handhaben und erlaubt ein leichtes Pumpen und Versprühen.

Die Erfindung betrifft weiter die Verwendung der erfindungsgemäßen Zusammensetzungen zur Erhärtungsbeschleunigung von bauchemischen Mischungen, enthaltend ein hydraulisches oder latent hydraulisches Bindemittel, insbesondere Zement, Schlacke, vorzugsweise granulierte Hochofenschlacke, Flugasche, Silikamehl, Metakaolin, natürliche Puzzolane, kalzinierten Ölschiefer, Kalziumsulfoaluminatzemente und/oder Kalziumaluminatzemente, vorzugsweise von bauchemischen Mischungen, die überwiegend Zement als hydraulisches Bindemittel enthalten.

Die Dosierung der erfindungsgemäßen Zusammensetzungen beträgt vorzugsweise von 0,01 Gew.-% bis 15 Gew.-%, bevorzugt 0,1 Gew.-% bis 10 Gew.-%, besonders bevorzugt 0,1 Gew.-% bis 5 Gew.-% des Feststoffes der Zusammensetzungen, bezogen auf das hydraulische oder latent hydraulische Bindemittel.

Die Erfindung wird durch die beigefügten Zeichnungen und die nachfolgenen Beispiele näher veranschaulicht.

Fig. 1 zeigt Röntgenbeugungsspektren von Proben, die (i) kristallinen Tobermorit 14 Å (Kristallitgröße 50 nm), (ii) amorphes Calciumsilicathydrat (Tobermorit 14 Å; Kristallitgröße 0,5 nm) enthalten und eine Röntgenbeugunsspektrum eines erfindungsgemäß geeigneten semigeordneten Calciumsilikathydrats (htCSH3)nach Rietveld-Analyse.

Fig. 2 zeigt Röntgenbeugungsspektren eines hydrothermalen Calciumsilicathydrats (htCSH1, Vergleich) und zweier erfindungsgemäß geeigneter semigeordneter Calciumsilikathydrat (htCSH2 und htCSH3).

Die unterscheidbaren Peaks bzw. Maxima wurden den Phasen zugeordnet; die Abkürzugen bedeuten:

P - Portlandit
Cc - Calcit
Qz - alpha-Quarz
T - Tobermorit 14 Å

sCSH - semigeordnetes Calciumsilicathydrat
aCSH - amorphes Calciumsilicathydrat
Xo - Xonotlit

Gemäß Fig. 1 zeigt kristalliner Tobermorit ein gut aufgelöstes Spektrum mit scharfen Peaks; im Spektrum des amorphen Calciumsilicathydrats sind keine einer kristallinen Calciumsilicathydrat-Phase zuordenbaren Maxima vorhanden. Der Beitrag des amorphen Calciumsilicathydrats zum Röntgenbeugunsspektrum mach sich durch einen erhöhten Untergrund insbesondere im 2θ-Bereich zwischen 25° und 35° (Cu Kα) bemerkbar. Das erfindungsgemäß geeignete semigeordnete Calciumsilikathydrat zeigt eine Verbreiterung und Überlagerung der Tobermorit-Maxima um 2θ = 30° , die einzelnen Peaks sind nicht mehr aufgelöst.

Gemäß Fig. 2 zeigt das hydrothermale Calciumsilicathydrat htCSH1 ein gut aufgelöstes Spektrum mit scharfen Xonotlit-Peaks. Die erfindungsgemäß geeigneten semigeordneten Calciumsilikathydrate htCSH2 und htCSH3 zeigen breite Maxima um 2θ = 30° .

Beispiele

Bestimmungsmethoden

(i) Partikelgröße des Rohstoffs (Mineralischer Bestandteil)
Die Partikelgröße des Rohstoffs für die Nassmahlung wurde mittels statischer Lichtstreuung charakterisiert. Dazu wurde das Gerät Mastersizer 2000 der Firma Malvern verwendet.

(ii) Bestimmung der spezifischen Oberfläche nach BET
Die spezifische Oberfläche nach BET des Rohstoffs für die Nassmahlung wurde mittels Stickstoffadsorption ermittelt. Hierfür wurde das Gerät "NOVA 4000e Surface Area and Pore Size Analyzer" der Firma Quantachrome verwendet. Für die Messungen wurden die Proben im Vorfeld bei 105 ° C bis zur Gewichtskonstanz getrocknet.

(iii) Röntgenbeugungsanalyse (XRD) und Rietveld-Analyse zur Bestimmung des röntgenamorphen Anteils und der Kristallitgröße vom Calcium-Silikat-Hydrats:
Die XRDs wurden mit einem Bruker AXS D4 ENDEAVOR ($CuK_\alpha$-Strahlung, 40 kV, 40 mA) und die Rietveld-Messungen mit der Software Topas 4.2 von Bruker durchgeführt.

Für die XRD-Analyse wurde das hydrothermale C-S-H aus dem Autoklavenprozess mittels Backenbrecher und Gegenprallmühle auf eine Partikelgröße mit einem d(95)-Wert von ≤ 1 mm zerkleinert. Anschließend wurden 5 g des Pulvers bei 105 ° C für 1 h im Laborofen getrocknet.

Für die XRD-Analyse wurden je 2 g des getrockneten Pulvers im Achatmörser so lange zerkleinert, bis die Probe vollständig durch ein Sieb mit einer Maschenweite von 36 μm gestrichen werden konnte.

Die Probe zur Bestimmung des Anteils der röntgenamorphen Phase war ein homogen vermischtes Pulver, das die Probe und eine bekannte Menge eines internen kristallinen Standards enthielt. Für diese Untersuchungen wurden 15 Ma.-% bis 30 Ma.-% Fluorit ($CaF_2$) mit der Probe (Partikelgröße < 36 μm) im Achatmörser homogen verrieben.

Anschließend wurde das homogenisierte Pulver, welches Fluorit als internen Standard enthält, mittels "Front Loading" präpariert und vermessen. Voraussetzung für die Verwendung von Fluorit als internen Standard ist, dass Fluorit nicht in der originalen Probe enthalten ist. Es ist ein Standard mit einem Massenschwächungskoeffizienten (mass attenuation coefficient, MAC) zu wählen, der dem der Probe ähnlich ist, um den Röntgenadsorptionskontrast zu minimieren. Die Proben haben einen MAC-Wert für Cu $K_\alpha$-Strahlung zwischen 75 und 80 $cm^2/g$. Deshalb wurde $CaF_2$ mit einem MAC-Wert von 94.96 $cm^2/g$ gewählt. Entsprechend der wissenschaftlichen Literatur werden für die Menge an internem Standard etwa 20 Ma.-% für einen amorphen Anteil der zu bestimmenden Probe zwischen 30 bis 90 % empfohlen (Scrivener, Snellings, and Lothenbach. "Chapter 4. X-Ray Powder Diffraction Applied to Cement." A Practical Guide to Microstructural Analysis of Cementitious Materials. CRC/Taylor & Francis Group, 2016. 107-176). Die untersuchten Proben enthalten 10 Ma.-% bis 70 Ma.-% an röntgenamorphen bzw. nanokristallinen Phasen mit Kristallitgößen < 5 nm, so dass 15 Ma.-% und 30 Ma.-% an internem Standard verwendet wurden.

Die mittels Röntgenbeugungsanalyse aufgezeichneten Röntgenbeugungsdiagramme (Diffraktogramme) wurden anschließend mittels Rietveld-Analyse mit der Software Topas 4.0 ausgewertet. Die Rietveld-Methode ist ein Standard-Verfahren zur Auswertung von Diffraktogrammen, die durch Röntgenbeugungsanalyse an Pulverproben gewonnen wurden. Die Methode ist ausführlich beschrieben z.B. in G. Will (2006): Powder Diffraction - The Rietveld method and the two-stage method, Springer Verlag, sowie R. Young (1995): The Rietveld method, IUCr Monographs on

Crystallography, vol. 5, Oxford University Press.

Für die Rietveld-Analyse der vorliegenden Proben wurden folgende Strukturdaten entsprechend der Inorganic Crystal Structure Database (ICSD) verwendet:

Tobermorit (Mineral der Calcium-Silicat-Hydrate): ICSD-Nummer 152489
Calcit: ICSD-Nummer 79674
Quarz: ICSD-Nummer 174
Portlandit: ICSD-Nummer 15471
Fluorit: ICSD-Nummer 60368

Mittels Rietveld-Analyse wurde neben dem Phasengehalt der Einzelphasen auch die Kristallitgröße der Calcium-Silikat-Hydrat-Phase Tobermorit ermittelt. Die Kristallitgröße spiegelt sich in der Halbwertsbreite der Reflexe einer Phase wieder und wird bei der Verfeinerung während der Rietveld-Analyse ermittelt. Der Zusammenhang zwischen Halbwertsbreite eines Reflexes im Diffraktogramm und der Kristallitgröße ist beschrieben z. B. in Kapitel 5.4.1 ab Seite 142 in R. Dinnebier, S. Billinge (2008): Powder Diffraction - Theory and Practice, RSC Publishing sowie auf Seite 113 in G. Will (2006): Powder Diffraction - The Rietveld method and the two-stage method, Springer Verlag, sowie R. Young (1995): The Rietveld method, IUCr Monographs on Crystallography, vol. 5, Oxford University Press.

Die Bestimmung des Anteils der röntgenamorphen Phase mittels internem Standard dient zur Quantifizierung der absoluten Menge der kristallinen Phasen und der röntgenamorphen Phasen und wurde entsprechend der Publikation von I. Madsen, N. Scarlett und A. Kern, "Description and survey of methodologies for the determination of amorphous content via X-ray powder diffraction." Zeitschrift für Kristallographie Crystalline Materials 226.12 (2011): 944-955 durchgeführt. Dabei wird während der Rietveld-Verfeinerung der bekannte Anteil des internen Standards vorgegeben und die anderen Phasen darauf bezogen. Der Differenz der Summe der kristallinen Phasen (Tobermorit, Calcit, Quarz, Portlandit, Fluorit) zu 100 Ma.-% entspricht dem röntgenamorphen Anteil der Probe.

(iv) Die Ladungsdichte wird bestimmt durch Titration mit poly-DADMAC (poly(diallyldimethylammonium chloride) oder Natrium-polyethylensulfonat mit einem Mettler Toledo DL 28 Titriergerät, kombiniert mit einem BTG Mütek Partikelladungsdetektor.

(v) Zur Bestimmung der Viskosität wurden die Suspensionen nach Ende der Vermahlung für 24 h bei Raumtemperatur verschlossen gelagert. Anschließend wurde an einem Brookfield-Viskosimeter DV-II+ bei 12 rpm mit Spindel 62 die Viskosität bestimmt.

(vi) Die Bestimmung des gewichtsmittleren Molgewichts des polymeren Dispergiermittels erfolgte mittels Gelpermeationschromatographie (GPC) (Säulenkombinationen: OH-Pak SB-G, OH-Pak SB 804 HQ und OH-Pak SB 802.5 HQ von Shodex, Japan; Elutionsmittel: 80 Vol.-% wässrige Lösung von $HCO_2NH_4$ (0,05 mol/l) und 20 Vol.-% Acetonitril; Injektionsvolumen 100 µl; Durchflussrate 0,5 ml/min). Die Kalibrierung zur Bestimmung der mittleren Molmasse erfolgte mit linearen Poly(ethylenoxid)- und Polyethylenglykol-Standards.

Herstellung von polymeren Dispergiermitteln:

Polymere 1, 2 und 7

In einem 1-Liter Vierhalskolben mit Thermometer, Rückflusskühler und einem Anschluss für zwei Zuläufe werden 875 g einer 40%igen wässrigen Lösung von Polyethylenglycolhydroxybutyl-monovinylether und NaOH (20 %) vorgelegt. Bezüglich der Molmassen der jeweiligen Polyethylenglycolhydroxybutyl-monovinylether sind die Details in der Tabelle 2 zu finden. Danach wird die Lösung auf 20 ° C abgekühlt. Auf die Polyethylenglycol-hydroxybutyl-monovinylether-Lösung im Vorlagekolben wird nun langsam Acrylsäure (99 %) gegeben. Der pH-Wert nimmt dabei auf ca. 4-5 ab. Darauf werden dann 0,5 g Eisen(II)sulfat-Heptahydrat sowie 5 g Rongalit und Mercaptoethanol gegeben. Nach kurzem Einrühren werden weiterhin 3 g 50%iges Wasserstoffperoxid zudosiert. Die Temperatur steigt dabei von 20 ° C auf ca. 30 ° C bis 65 ° C an. Die Lösung wird anschließend 10 Minuten gerührt, bevor sie mit Natronlauge (20 %) neutralisiert wurde. Man erhält eine leichtgelb gefärbte, klare wässrige Polymerlösung mit einem Feststoffgehalt von ca. 40 Gew.-%. Die Mengenangaben der verwendeten Chemikalien (NaOH, Mercaptoethanol und Acrylsäure) sowie die Molmassen des jeweiligen Polyethylenglycol-hydroxybutyl-monovinylethers (PEG-HBVE), gewichtsmittlere Molmasse und die Ladungsdichte des Polymers (Molzahl Carboxylat- und/oder Carboxylgruppen/ Gesamtmol-masse des PCEs) (mol/(g/mol)) sind den untenstehenden Tabellen 1 und 2 zu entnehmen.

Tabelle 1: Details zur Herstellung der P1, P2 und P7

| Polymer | NaOH (20 %) [g] | Mercaptoethano l [g] | Acrylsäure (99 %) [g] |
|---|---|---|---|
| P1 | 40 | 1,5 | 30,8 |
| P2 | 10 | 1,7 | 42,4 |
| P7 | 0 | 0,9 | 21,9 |

Tabelle 2: Übersicht der strukturellen Parameter der Polymere

| Polymer | Ladungsdichte (μeq/g) | $M_w$ (g/mol) | Molmasse PEG-HBVE (g/mol) |
|---|---|---|---|
| P1 | 1110 | 28537 | 5800 |
| P2 | 1488 | 28659 | 3000 |
| P7 | 811 | 35665 | 5800 |

Polymer P3

Das Polymer P3 ist ein Kammpolymer und basiert auf den Monomeren Maleinsäure, Acrylsäure und Vinyloxybutylpolyethyleneglykol - 5.800. Das molare Verhältnis von Acrylsäure zu Maleinsäure beträgt 7. Das Molgewicht $M_w$ beträgt 40.000 g/mol und wurde über GPC bestimmt. Der Feststoffgehalt beträgt 45 Gew. %. Die Synthese ist zum Beispiel in EP 0894811 beschrieben. Die Ladungsdichte ist 930 μeq/g.

Polymer P4

Das Polymer P4 ist ein Kondensat aus den Bausteinen PhenolPEG5000, Phenoxyethanolphosphat und Formaldehyd. Das Molekulargewicht $M_W$ beträgt 25.730 g/mol. Das Polymer wurde entsprechend Polymer 7 der WO 2015/091461 (Tabelle 1 und 2) hergestellt.

Polymer P5

Das Polymer P5 ist ein Kammpolymer polymerisiert aus einem HydroxyethylmethacrylatPhosphorsäureester und einem Ester von Methacrylsäure und Methylpolyethylenglykol mit einem Molekulargewicht von 5.000 g/mol. Die Synthese wurde entsprechend der Herstellung von P1 aus der WO 2014/026938 durchgeführt. Das Molekulargewicht $M_W$ beträgt 3.660 g/mol. Der Feststoffgehalt der Polymerlösung beträgt 29 Ma.-%.

Polymer P6

Das Polymer 6 ist ein kommerziell erhältliches, mit NaOH teilneutralisiertes Polyacrylat (Neutralisationsgrad 80 %). Das mittlere Molgewicht $M_W$ beträgt 5.000 - 10.000 g/mol. Der Feststoffgehalt der Polymerlösung beträgt 45 Ma.-%.

Hydrothermales Calciumsilikathydrat (htCSH)

htCSH1: Circolit, erhältlich von der Cirkel GmbH & Co. KG, Haltern am See.

htCSH2:

Für die Herstellung von htCSH2 wurden 153 kg Quarzmehl (d(95) < 63 μm, SiO2-Gehalt > 95 Ma.-%), 150 kg Branntkalk (d(95) < 90 μm, CaO-Gehalt > 90 Ma.-%), 222 g Aluminiumpaste (Wassergehalt = 40 %, d(50) = 15 μm) und 340 kg Wasser vermischt. Diese Suspension wurde 3 h bei einer Temperatur von 20 ° C stehen gelassen. Anschließend wurde das Material 8 h in einem Autoklaven bei 150 ° C (ca. 5 bar) gehalten. Danach wurde das Material auf Raumtemperatur abgekühlt und weiter mittels Brecher und Kugelmühlen auf eine Partikelgröße d(95) < 1 mm sowie d(50) < 500 μm zerkleinert. Der Feuchtegehalt (bestimmt durch Trocknung bei 105 ° C bis zur Gewichtskonstanz) war 36,6 Ma.-%.

htCSH3:

Für die Herstellung von htCSH3 wurden 100 kg Quarzmehl (d(95) < 63 μm, $SiO_2$-Gehalt > 95 Ma.-%), 200 kg

Branntkalk (d(95) < 90 µm, CaO-Gehalt > 90 Ma.-%), 222 g Aluminiumpaste (Wassergehalt = 40 %, d(50) = 15 µm) und 410 kg Wasser vermischt. Diese Suspension wurde 3 h bei einer Temperatur von 20 ° C stehen gelassen. Anschließend wurde das Material 12 h in einem Autoklaven bei 170 ° C (ca. 8 bar) gehalten. Danach wurde das Material auf Raumtemperatur abgekühlt und weiter mittels Brecher und Kugelmühlen auf eine Partikelgröße d(95) < 1 mm sowie d(50) < 500 µm zerkleinert. Der Feuchtegehalt (bestimmt durch Trocknung bei 105 ° C bis zur Gewichtskonstanz) war 40,0 Ma.-%.

Die verwendeten Ausgangsmaterialien weisen folgende Eigenschaften auf (Tabelle 3):

Tabelle 3

| Typ | htCSH1 | htCSH2 | htCSH3 |
|---|---|---|---|
| Zusammensetzung (in Ma.-%) (1) | | | |
| C-S-H-Komponente | | | |
| C-S-H-Phase | Xonotlit | Tobermorit 14Å (zugrundegelegte C-S-H-Phase) | Tobermorit 14Å (zugrundegelegte C-S-H-Phase) |
| | 84,5 | 14,6 | 23,3 |
| Röntgenamorpher Anteil | 12,5. | 51,1 | 60,6 |
| Kristalline Fremdstoffkomponente | | | |
| Quarz | n.d. | 27,3 | 4,5 |
| Portlandit | n.d. | 2,6 | 7,0 |
| Calcit | 3,0 | 2,7 | 4,6 |
| Eigenschaften | | | |
| Kristallitgröße C-S-H-Phase | 33 nm | 3,6 nm | 3,6 nm |
| Partikelgrößenverteilung | | | |
| d(10) in µm | 1 | 7 | 6 |
| d(50) in µm | 7 | 101 | 109 |
| d(90) in µm | 21 | 217 | 227 |
| BET Oberfläche | 38 $cm^2/g$ | 113 $cm^2/g$ | 113 $cm^2/g$ |
| molares Verhältnis Ca/Si (3) | 1,09 * | 0,89 (2) | 1,77 (2) |
| n.d.: nicht bestimmbar (Gehalt ist kleiner der Nachweisgrenze)<br>* ermittelt aus Produktdatenblättern<br>(1) Aus der XRD mit anschließender Rietveld-Analyse<br>(2) Ermittelt mittels Röntgenfluoreszensanalyse (XRF)<br>(3) aus der Gesamtmenge der anorganischen Bestandteile des hydrothermalen CSH | | | |

Die Nassmahlung des hydrothermal hergestellten Calciumsilikathydrats wurde mittels Schüttelsetup (Rüttler SK 300 von Fast & Fluid Management) durchgeführt. Die Bedingungen für die einzelnen Nassmahlungen sind in Tabelle 4 aufgelistet. Für die Vermahlung wurden 100 g der Suspension entsprechend der Parameter in Tabelle 4 in 250 ml Glasflaschen, die mit 500 g Mahlperlen aus $ZrO_2$ mit einem Durchmesser von 1 mm gefüllt waren, gegeben. Die Mahlung fand statt auf Stufe 3 bei einer Wirkleistung $I_0$ von 1281,1 W statt. Zwischen der Herstellung der Suspensionen (Vermischen von hydrothermalem C-S-H, Wasser und wasserlöslischem Polymer) und der eigentlichen Nassmahlung unter hoher Scherenergie wurden die Suspension 30 Minuten ohne zusätzliche mechanische Schereinwirkung ruhen gelassen. Nach der Mahlung wurden die Suspension durch ein Sieb von den Mahlperlen abgetrennt und teilweise mit destillierten Wasser nachgespült. Der Feststoffgehalt der Suspension wurde anschließend durch Trocknen der Suspension bei 60 ° C bis zur Gewichtskonstanz ermittelt.

Für den Vergleich zum Stand der Technik wurden 3 Suspensionen durch Fällung gemäß WO 2010/026155 hergestellt (pptCSH). Diese enthalten amorphe CSH-Keime, die durch das Polymer stabilisiert sind.

Tabelle 4

| Beispiel | Ausgangsmaterial | Gehalt hydrothermales CSH (Ma.-%) | Polymer | Polymergehalt (Feststoff) in Suspension (Ma.-%) | Feststoffgehalt nach Mahlung [1] (Ma.-%) | Mahldauer (min) | Scherenergie (kWh/t) |
|---|---|---|---|---|---|---|---|
| S1* | htCSH1 | 15 | - | - | 15.26 | 180 | 604 |
| S2* | htCSH1 | 15 | P4 | 2.5 | 17.67 | 180 | 604 |
| S3* | htCSH1 | 15 | P1 | 2.5 | 17.63 | 180 | 604 |
| S4* | htCSH1 | 15 | P3 | 2.5 | 17.69 | 180 | 604 |
| S5* | htCSH1 | 15 | P6 | 2.5 | 17.48 | 180 | 604 |
| S6* | htCSH1 | 15 | P5 | 2.5 | 17.73 | 180 | 604 |
| S7 | htCSH2 | 15 | P1 | 2,5 | 11.22 | 180 | 604 |
| S8 | htCSH2 | 15 | P1 | 3,5 | 12.38 | 180 | 604 |
| S9 | htCSH2 | 15 | P1 | 7,5 | 15.79 | 180 | 604 |
| S10 | htCSH3 | 15 | P1 | 2,5 | 11.56 | 180 | 604 |
| S11 | htCSH3 | 15 | P1 | 3,5 | 12.70 | 180 | 604 |
| S12 | htCSH3 | 15 | P1 | 7,5 | 16.27 | 180 | 604 |
| S13 | htCSH3 | 13,91 | P7 | 2,8 | 15.22 | 20 | 67 |
| S14 | htCSH3 | 13,91 | P7 | 2,8 | 16.72 | 60 | 201 |
| S15 | htCSH3 | 13,91 | P7 | 2,8 | 16.86 | 120 | 402 |
| S16* | pptCSH | -- | P7 | 2,8 | 17.92[2] | 20 | 67 |
| S17* | pptCSH | -- | P7 | 2,8 | 18.01[2] | 60 | 201 |
| S18* | pptCSH | -- | P7 | 2,8 | 18.22[2] | 120 | 402 |

(1) Der Feststoffgehalt der Suspension nach der Mahlung wurde durch Trocknen von 1 g Suspension bei 60 ° C im Trockenschrank bis zur Gewichtskonstanz ermittelt.
(2) vor der Viskositätsmessung wurden die Proben auf einen Feststoffgehalt von 15 Ma.- % mit Wasser verdünnt.
* Vergleichsbeispiel.

Für den Vergleich zum Stand der Technik gemäß WO 2010/026155 wurden 3 Suspensionen (S16, S17, S18) sowie 3 erfindungsgemäße Suspensionen (S13, S14, S15) hergestellt, wobei bei den Beispielen S13 bis S18 194 g Suspension in den 250 ml Flaschen bei einer Mahlkugelmenge von 500 g vermahlen wurden.

Für die Herstellung von S16 bis S18 wurden 15,5 g $Ca(OH)_2$ (Merck, CAS 1305-62-0, Reinheit > 97 %) und 12,1 g $SiO_2$ (Silica, fumed; CAS 112945-52-5, Sigma Aldrich, Reinheit > 99,9 %) mit Wasser und Polymer (siehe Tabelle 2 oben) vermischt, so dass die Gesamtmasse der Suspension 194 g ergab.

Zur Bestimmung der Scherenergie wurde während des Betriebs des Rüttler SK 300 mittels AC-Vielfachmesszange MX 350 der Firma Metrix die Stromstärke im Leerbetrieb $I_0$ (Rüttelbewegung ohne Mahlperlen und Mahlgut) sowie die Stromstärke im Mahlbetrieb $I_P$ (Rüttelbewegung bei gefüllten Glasflaschen mit Mahlperlen und Mahlgut) gemessen. Die Wirkspannung lag in beiden Fällen 230 V.

Die sich aus den gemessenen Stromstärken ergebene Wirkleistung $I_0$ lag bei 1281,1 W während die Wirkleistung im Mahlbetrieb $I_P$ für die Mahlung von 400 g Suspension bei 1361,6 W lag. Daraus ergibt sich eine notwendige Wirkleistung $P_W$ von 201,25 W bei der Mahlung von 1 kg Suspension.

Der Polymergehalt in der Suspension bezieht sich immer auf den Feststoffgehalt des verwendeten Polymers.

Die Suspensionen wurden hinsichtlich Beschleunigungswirkung mittels Wärmeflusskalorimetrie und hinsichtlich Viskosität mittels Brookfield-Viskosimeter charakterisiert.

Wärmeflusskalorimetrie:

Zur Bestimmung der Beschleunigungsleistung der Beschleunigersuspensionen wurden Zementpasten, die die Beschleunigersuspensionen enthalten, hergestellt und deren Hydratationskinetik mittels isothermer Wärmeflusskalorimetrie gemessen. Dazu wurden 100 g Portland-Zement (CEM I 52.5 R) mit 40 g Wasser mittels Überkopfrührer für 90 Sekunden bei 500 rpm vermischt. Die zu prüfenden Suspension wurde mit dem Anmachwasser zu dem Zement gegeben, wobei dann die Anmachwassermenge auf die in der Suspension enthaltenen Wassermenge korrigiert wurde, so dass bei jedem Versuch ein Wasser/Zement-Wert von 0.4 eingestellt wurde. Die Zugabemengen der zu prüfenden Suspension sind in Tabelle 5 erfasst.

Jeweils 6 g Mörtel oder Zementpaste wurden dann in das Messgefäß eingefüllt und dieses in das Kalorimeter eingeführt. Die isotherme Wärmeflusskalorimetrie wurde mit dem Kalorimeter TAMAir von TA Instruments bei 20 ° C durchgeführt.

Es wurde die kumulierte Hydratationswäre nach 6 h ermittelt. Weiterhin wurden zum Vergleich der Proben jeweils die maximalen Steigungen im Wärmefluss zwischen 2 und 8 Stunden ermittelt und diese auf die Steigung der Vergleichsmessung (Zement + Wasser) bezogen. Die Bestimmung der relativen Steigung wurde entsprechend der Veröffentlichung von **L.** Nicoleau (2012) durchgeführt (L. Nicoleau: The acceleration of cement hydration by seeding: Influence of the cement mineralogy. Ibausil 18. Internationale Baustofftagung in Weimar (2012), Tagungsband Seiten 1-0330 - 1-0337). Die Ergebnisse der kalorimetrischen Messungen sind in der nachfolgenden Tabelle 5 zusammengestellt:
Die Ergebnisse sind in Tabelle 5 erfasst.

Tabelle 5

| Beschleu - nigersuspension | Viskosität Suspensio n (mPas) | Zugabemeng e Suspension bezogen auf Zement (Ma.%) | Zugabemenge CSH-Ausgangsmaterial , bezogen auf Zement | HoH nach 6 h [J/g Zement] | Beschleu -nigungsfaktor |
|---|---|---|---|---|---|
| ohne | | - | | 23,25 | 1,00 |
| S1 | >100.000 | 3,28 | 0,5 Ma.-% | 38,08 | 1,11 |
| S1 | >100.000 | 6,55 | 1,0 Ma.-% | 46,89 | 1,11 |
| S2 | 85 | 3,30 | 0,5 Ma.-% | 41,52 | 1,30 |
| S2 | 85 | 6,60 | 1,0 Ma.-% | 49,83 | 1,54 |
| S3 | 30 | 3,31 | 0,5 Ma.-% | 42,07 | 1,39 |
| S3 | 30 | 6,62 | 1,0 Ma.-% | 53,18 | 1,83 |
| S4 | 20 | 3,30 | 0,5 Ma.-% | 41,82 | 1,37 |
| S4 | 20 | 6,60 | 1,0 Ma.-% | 51,87 | 1,65 |
| S5 | 3 | 3,34 | 0,5 Ma.-% | 33,41 | 1,35 |

(fortgesetzt)

| Beschleu - nigersuspension | Viskosität Suspensio n (mPas) | Zugabemeng e Suspension bezogen auf Zement (Ma.%) | Zugabemenge CSH-Ausgangsmaterial , bezogen auf Zement | HoH nach 6 h [J/g Zement] | Beschleu -nigungsfaktor |
|---|---|---|---|---|---|
| S5 | 3 | 6,68 | 1,0 Ma.-% | 36,38 | 1,61 |
| S6 | 7.5 | 3,29 | 0,5 Ma.-% | 33,83 | 1,20 |
| S6 | 7.5 | 6,58 | 1,0 Ma.-% | 41,04 | 1,41 |
| S7 | 10 | 5,20 | 0,5 Ma.-% | 48,32 | 1,85 |
| S7 | 10 | 10,40 | 1,0 Ma.-% | 59,95 | 2,37 |
| S8 | 20 | 4,98 | 0,5 Ma.-% | 44,66 | 1,87 |
| S8 | 20 | 9,96 | 1,0 Ma.-% | 54,99 | 2,26 |
| S9 | 30 | 4,75 | 0,5 Ma.-% | 33,32 | 1,50 |
| S9 | 30 | 9,50 | 1,0 Ma.-% | 36,27 | 1,70 |
| S10 | 15 | 5,05 | 0,5 Ma.-% | 57,74 | 2,13 |
| S10 | 15 | 10,09 | 1,0 Ma.-% | 69,02 | 2,70 |
| S11 | 15 | 4,85 | 0,5 Ma.-% | 55,01 | 2,22 |
| S11 | 15 | 9,71 | 1,0 Ma.-% | 67,23 | 2,65 |
| S12 | 20 | 4,61 | 0,5 Ma.-% | 41,01 | 2,26 |
| S12 | 20 | 9,22 | 1,0 Ma.-% | 45,66 | 2,52 |
| S13 | 18 | 9,86 | 1,25 Ma.-% | 51,30 | 1,42 |
| S14 | 20 | 8,97 | 1,25 Ma.-% | 59,42 | 1,67 |
| S15 | 35 | 8,90 | 1,25 Ma.-% | 65,31 | 1,79 |
| S16 | >100.000 | 8,37 | 1,25 Ma.-% | 64,91 | 1,65 |
| S17 | >100.000 | 8,33 | 1,25 Ma.-% | 68,95 | 1,80 |
| S18 | >100.000 | 8,23 | 1,25 Ma.-% | 66,58 | 1,69 |
| HoH: kumulierte Hydratationswärme ab 0,5 h Hydratation. | | | | | |

Eine Viskosität von > 100.000 bedeutet, dass die Viskosität nicht messbar war, weil sich ein festes Gel ausgebildet hat.

## Patentansprüche

1. Zusammensetzung geeignet zur Erhärtungsbeschleunigung von bauchemischen Mischungen, enthaltend ein hydraulisches oder latent hydraulisches Bindemittel, umfassend einen mineralischen Bestandteil und ein polymeres wasserlösliches Dispergiermittel, wobei der mineralische Bestandteil ein semigeordnetes Calciumsilikathydrat mit einer scheinbaren Kristallitgröße von 1 bis 15 nm, welche mittels Röntgenbeugung und Rietveld-Analyse bestimmt wird und weniger als 35 Gew.- %, bezogen auf das Trockengewicht des mineralischen Bestandteils, an kristallinen Phasen, die keine Calciumsilikathydrat-Phase (C-S-H) sind enthält, wobei unter "semigeordnet" verstanden wird, dass das Calciumsilikathydrat (1) einen geringeren Ordnungsgrad als ein makroskopisches kristallines Calciumsilikathydrat und (2) einen höheren Ordnungsgrad als amorphes Calciumsilikathydrat aufweist und wobei der Hauptbeugungspeak des semigeordneten Calciumsilikathydrats im Röntgenbeugungsdiagramm eine Halbwertsbreite aufweist, die wenigstens das 1,25 fache der Halbwertsbreite des entsprechenden Hauptbeugungspeaks der kristallinen Form mit einer Kristallitgröße von 50 nm oder größer beträgt.

2. Zusammensetzung nach Anspruch 1, wobei das molare Verhältnis von Calcium zu Silicium im mineralischen Bestandteil im Bereich von 0,5 bis 2,5, bevorzugt 0,8 bis 2,2, besonders bevorzugt 1,0 bis 2,0 oder 1,6 bis 2,0 liegt.

**3.** Zusammensetzung nach Anspruch 1 oder 2, enthaltend 2 Gew.-% oder weniger Alkalimetalle, bezogen auf den mineralischen Bestandteil.

**4.** Zusammensetzung nach einem der vorhergehenden Ansprüche, wobei die spezifische BET-Oberfläche des mineralischen Bestandteils im Bereich von 30 bis 150 $m^2/g$, bevorzugt 80 bis 150 $m^2/g$, insbesondere 90 bis 150 $m^2/g$, besonders bevorzugt 100 bis 150 $m^2/g$, bestimmt nach DIN ISO 9277:2003-05, liegt.

**5.** Verfahren zur Herstellung einer Calciumsilikathydrat-enthaltenden Zusammensetzung, wobei man einen mineralischen Bestandteil in einem wässrigen Medium mit mindestens einem wasserlöslichen polymeren Dispergiermittel durch Einbringen von kinetischer Energie in Kontakt bringt, wobei der mineralische Bestandteil ein semigeordnetes Calciumsilikathydrat mit einer scheinbaren Kristallitgröße von 1 bis 15 nm und weniger als 35 Gew.-%, bezogen auf das Trockengewicht des mineralischen Bestandteils, an kristallinen Phasen, die keine Calciumsilikathydrat-Phase (C-S-H) sind enthält, wobei der mineralische Bestandteil durch Umsetzung von Calciumoxid oder Calciumhydroxid mit Siliciumdioxid in Anwesenheit von Wasser unter hydrothermalen Bedingungen bei einer Temperatur im Bereich von 100 °C bis 400 °C über einen Zeitraum von 5 h bis 30 h hergestellt wird, wobei das in Kontakt bringen des mineralischen Bestandteils mit dem wasserlöslichen polymeren Dispergiermittel durch Vermahlen erfolgt.

**6.** Verfahren nach Anspruch 5, wobei der mineralische Bestandteil in Anwesenheit eines Schäumungsmittels hergestellt ist.

**7.** Verfahren nach Anspruch 6, wobei das Vermahlen bis zu einer Teilchengröße d(50) des mineralischen Bestandteils von ≤ 400 nm, bevorzugt ≤ 300 nm, besonders bevorzugt ≤ 200 nm erfolgt, bestimmt mittels statischer Lichtstreuung.

**8.** Verfahren einem der Ansprüche 5 bis 7, wobei als polymeres Dispergiermittel ein Kammpolymer mit Polyalkylenoxid-Seitenketten verwendet wird.

**9.** Baustoffmischung, umfassend die Zusammensetzung nach einem der Ansprüche 1 bis 4, sowie ein hydraulisches oder latent hydraulisches Bindemittel, insbesondere Zement, Schlacke, vorzugsweise granulierte Hochofenschlacke, Flugasche, Silikamehl, Metakaolin, natürliche Puzzolane, kalzinierten Ölschiefer, Calciumsulfoaluminat-zemente und/oder Calciumaluminatzemente.

**10.** Verwendung einer Zusammensetzung gemäß einem der Ansprüche 1 bis 4 zur Erhärtungsbeschleunigung von bauchemischen Mischungen, enthaltend ein hydraulisches oder latent hydraulisches Bindemittel, insbesondere Zement, Schlacke, vorzugsweise granulierte Hochofenschlacke, Flugasche, Silikamehl, Metakaolin, natürliche Puzzolane, kalzinierten Ölschiefer, Calciumsulfoaluminatzemente und/oder Calciumaluminatzemente, vorzugsweise von bauchemischen Mischungen, die überwiegend Zement als hydraulisches Bindemittel enthalten.

## Claims

**1.** composition suitable for accelerating the hardening of construction chemical mixtures, containing a hydraulic or latent hydraulic binder,

comprises a mineral constituent and a polymeric water-soluble dispersant, wherein the mineral constituent is a semi-ordered calcium silicate hydrate with an apparent Kristallitgror.ie of 1 to 15 nm, which is determined by X-ray diffraction and Rietveld analysis and contains less than 35 wt.

%, in relation to the dry weight of the mineral component, in crystalline phases that are not calcium silicate hydrate phase (C-S-H), wherein "semi-ordered" is understood to mean that the calcium silicate hydrate (1) has a lower degree of order than a macroscopic crystalline calcium silicate hydrate and (2) a higher degree of order than amorphous calcium silicate hydrate, and where the main diffraction peak of the semi-ordered calcium silicate hydrate in the X-ray diffraction diagram has a half-width that is at least 1.25 times the half-width of the corresponding main diffraction peak of the crystalline form with a Kristallitgror.ie of 50 nm or greater.

**2.** The composition according to claim 1, wherein the molar ratio of calcium to silicon in the mineral component in the range of 0.5 to 2.5, preferably 0.8 to 2.2, especially preferably 1.0 to 2.0 or 1.6 to 2.0.

**3.** The composition according to claim 1 or 2, comprising 2% or less alkali metals by weight in relation to the mineral constituent.

**4.** composition according to any of the preceding claims, wherein the specific BET surface of the mineral component is in the range of 30 to
150 m2/g, preferably 80 to 150 m2/g, in particular 90 to 150 m2/g, especially preferably 100 to 150 m2/g, determined according to DIN ISO 9277:2003-05.

**5.** Process for the preparation of a composition containing calcium silicate hydrate, wherein a mineral constituent is brought into contact with at least one water-soluble polymeric dispersant in an aqueous medium by the introduction of kinetic energy, wherein the mineral constituent is a

Semi-ordered calcium silicate hydrate with an apparent Kristallitgror.ie of 1 to 15 nm and less than 35 % by weight, based on the dry weight of the mineral constituent, in crystalline phases which are not calcium silicate hydrate phase (C-S-H), wherein the mineral constituent is formed by reaction of calcium oxide or calcium hydroxide with silicon dioxide in the presence of water under hydrothermal conditions at a temperature in the range of 100 °C to 400 °C over a period of 5 h to 30 h, wherein the contact of the mineral component with the water-soluble polymer dispersant by grinding.

**6.** The method of claim 5, wherein the mineral component is prepared in the presence of a foaming agent.

**7.** The method of claim 6, wherein grinding up to a Teilchengror.ie d(50) of the mineral constituent of::;; 400 nm, preferred::;; 300 nm, especially preferable ::;; 200 nm, determined by static light scattering.

**8.** A method of any one of claims 5 to 7, wherein a comb polymer with polyalkylene oxide side chains is used as a polymeric dispersant.

**9.** Mixture of building materials, comprising the composition according to one of the requirements
1 to 4, as well as a hydraulic or latent hydraulic binder, in particular cement, slag, preferably granulated blast furnace slag, fly ash, silica flour, metakaolin, natural pozzolans, calcined oil shale, calcium sul foaluminate cements and/or calcium aluminate cements.

**10.** The use of a composition of any one of claims 1 to 4 for accelerating the hardening of construction chemical mixtures comprising a hyd-raulic or latent hydraulic binder, in particular cement, slag, preferably granulated blast furnace slag, fly ash, silica flour, metakaolin, natural pozzolans, calcined oil shale, calcium sulfoaluminate cements and/or calcium aluminate cements, preferably from construction chemical mixtures containing predominantly cement as a hydraulic binder.

## Revendications

**1.** composition adaptée à l'accélération du durcissement des mélanges chimiques de construction, contenant un liant hydraulique ou hydraulique latent,

comprend un constituant minéral et un dispersant polymérique soluble dans l'eau, où le constituant minéral est un hydrate de silicate de calcium semi-ordonné avec un Kristallitgror.ie apparent de 1 à 15 nm, déterminé par diffraction des rayons X et analyse de Rietveld, et contenant moins de 35 wt.
%, par rapport au poids à sec du composant minéral, en cristallin phases qui ne sont pas de la phase hydrate de silicate de calcium (C-S-H), où « semi-ordonné » est compris comme signifiant que l'hydrate de silicate de calcium (1) a un degré d'ordre inférieur à celui d'un hydrate de silicate de calcium cristallin macroscopique et (2) un degré d'ordre supérieur à celui de l'hydrate de silicate de calcium amorphe, et où le principal pic de diffraction du silicate de calcium semi-ordonné s'hydrate dans la Le diagramme de diffraction des rayons X a une demi-largeur d'au moins 1,25 fois la moitié de la moitié de la largeur du pic principal de diffraction correspondant de la forme cristalline avec une Kristallitgror.ie de 50 nm ou plus.

**2.** La composition selon la revendication 1, où le rapport molaire du calcium au silicium dans la composante minérale dans la plage de 0,5 à 2,5, de préférence de 0,8 à 2,2, surtout de préférence 1,0 à 2,0 ou 1,6 à 2,0.

**3.** La composition selon la revendication 1 ou 2, comprenant 2 % ou moins de métaux alcalins en rapport au constituant minéral.

4. composition selon l'une des revendications précédentes, où la surface spécifique de la partie minérale se situe dans la plage de 30 à 150 m2/g, de préférence 80 à 150 m2/g, en particulier 90 à 150 m2/g, surtout de préférence 100 à 150 m2/g, déterminé selon la norme DIN ISO 9277:2003-05.

5. Procédé de préparation d'une composition contenant de l'hydrate de silicate de calcium, dans lequel un constituant minéral est mis en contact avec au moins un dispersant polymérique soluble dans l'eau dans un milieu aqueux par introduction d'énergie cinétique, où le constituant minéral est un Hydratation de silicate de calcium semi-ordonnée avec un Kristallitgror.ie apparent de 1 à 15 nm et moins de 35 % en poids, basée sur le poids sec du constituant minéral, dans des phases cristallines qui ne sont pas de phase hydrate de silicate de calcium (C-S-H), où le constituant minéral est formé par réaction

   d'oxyde de calcium ou d'hydroxyde de calcium avec du dioxyde de silicium en présence d'eau sous conditions hydrothermales à une température comprise entre 100 °C et 400 °C sur une période de 5 h à 30 h, où le contact du composant minéral avec le soluble dans l'eau
   dispersant polymère par meulage.

6. La méthode de la revendication 5, dans laquelle le composant minéral est préparé en présence d'un agent moussent.

7. La méthode de la revendication 6, dans laquelle le meulage jusqu'à un Teilchengror.ie d(50) du constituant minéral de ::;; 400 nm, préférable ::;; 300 nm, particulièrement préférable ::;; 200 nm, déterminé par la diffusion statique de la lumière.

8. Une méthode de l'une des revendications 5 à 7, dans laquelle un polymère peigne avec des chaînes latérales en oxyde de polyalkylène est utilisé comme dispersant polymérique.

9. Mélange de matériaux de construction, composant la composition selon l'une des exigences 1 à 4, ainsi qu'un liant hydraulique ou hydraulique latent, en particulier le ciment, le scoitier, de préférence le laitier granulé de haut fourneau, les cendres volantes, la farine de silice, la métakaoline, les pozzolanes naturelles, le schiste bitumineux calciné, les ciments calcium-foaluminate et/ou les ciments à l'aluminate de calcium.

10. L'utilisation d'une composition de l'une des revendications 1 à 4 pour accélérer le durcissement des mélanges chimiques de construction comprenant un liant hydraulique hyd-raulic ou latent, en particulier le ciment, le scoit, de préférence le laitier granulé de haut fourneau, les cendres volantes, la farine de silice, la métakaoline, les pouzolanes naturelles, le schiste bitumineux calciné, les ciments sulfoaluminate de calcium et/ou des ciments à l'aluminate de calcium, de préférence à partir de mélanges chimiques de construction contenant principalement du ciment comme liant hydraulique.

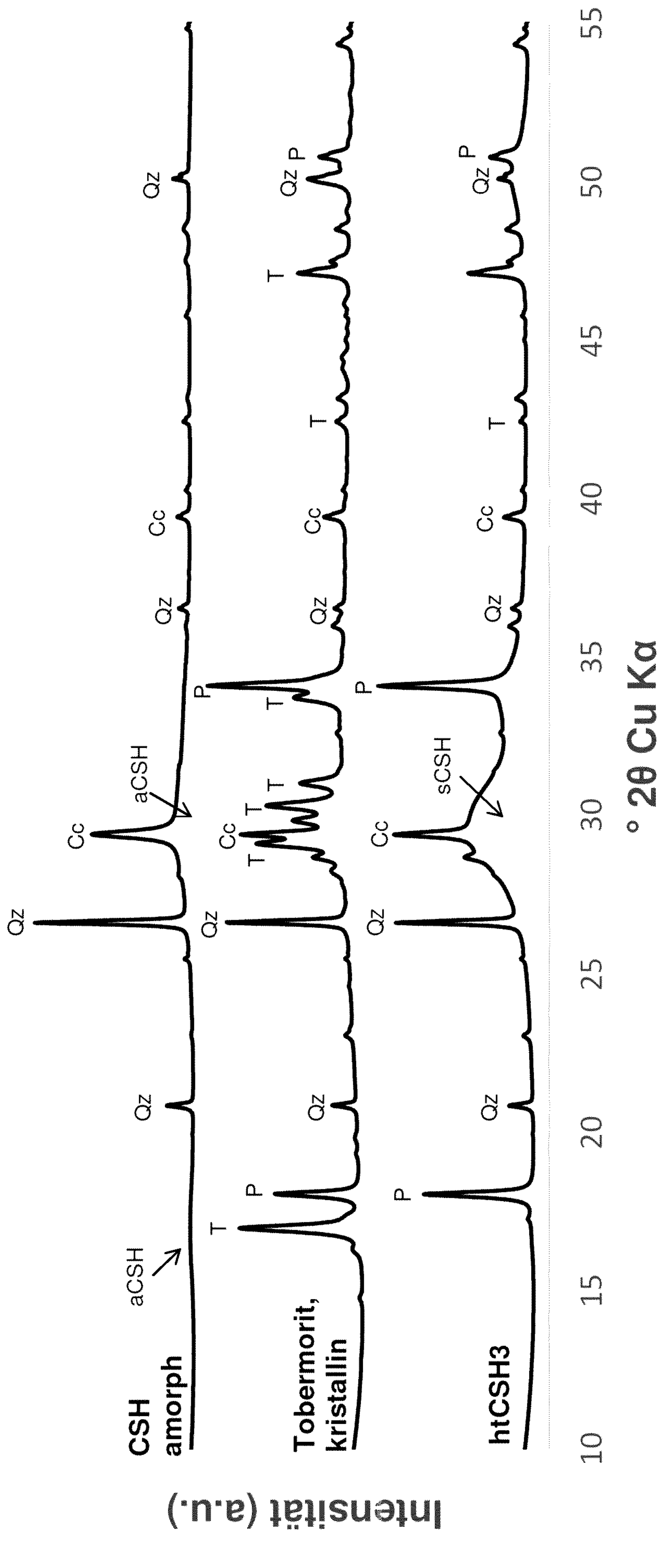

Intensität (a.u.)
CSH amorph
Tobermorit, kristallin
htCSH3
aCSH
sCSH
Qz
Cc
T
P
10
15
20
25
30
35
40
45
50
55
° 2θ Cu Kα


Fig. 1

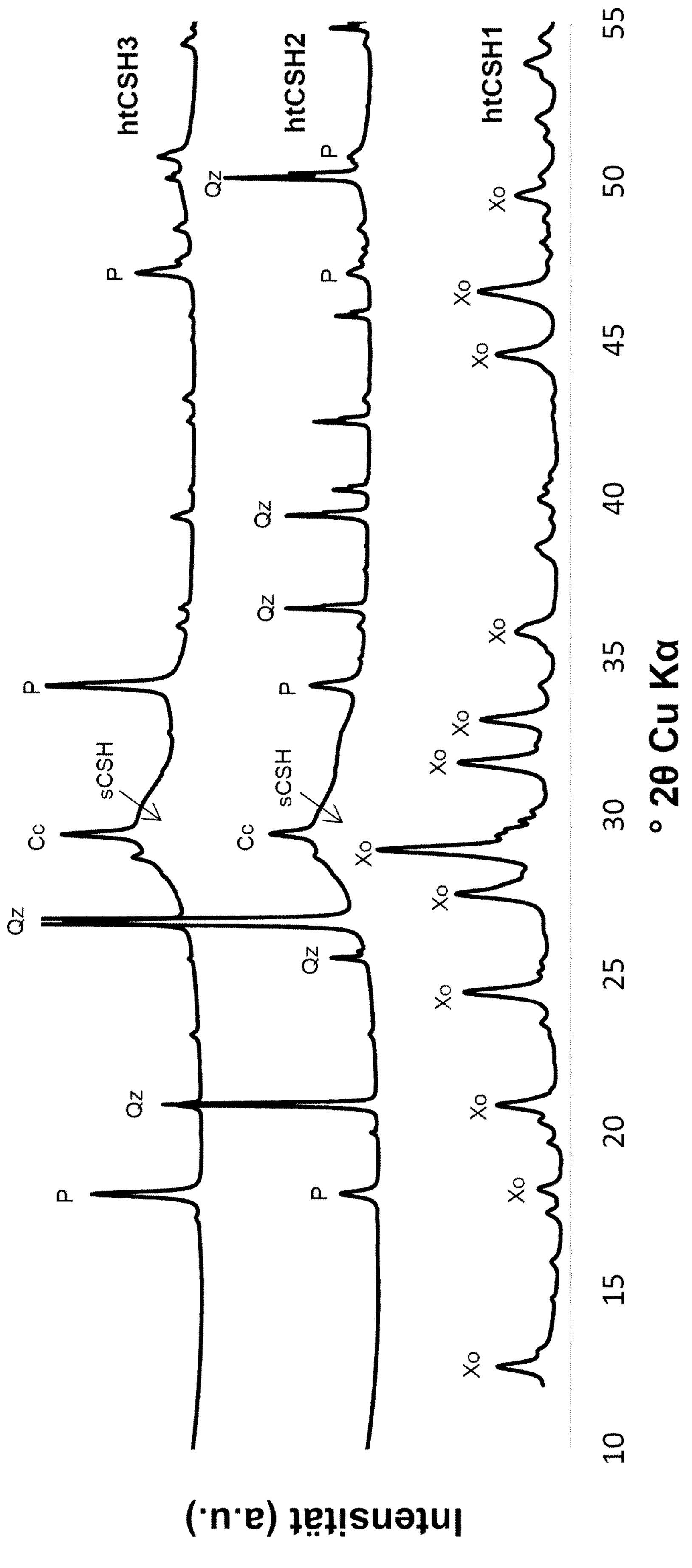
Intensität (a.u.)
° 2θ Cu Kα
10
15
20
25
30
35
40
45
50
55
htCSH3
htCSH2
htCSH1
P
Qz
Cc
sCSH
Xo

Fig.2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2010026155 A
- WO 9504007 A
- WO 2013017391 A
- EP 2243754 A1
- EP 2801557 B9
- EP 2801558 A1
- EP 2801559 A1
- WO 2017032719 A
- EP 2607329 A
- EP 0894811 A
- EP 1851256 A
- EP 2463314 A
- EP 0753488 A
- WO 2006042709 A
- WO 2015091461 A
- WO 2014026938 A


### In der Beschreibung aufgeführte Nicht-Patentliteratur


- **G. LAND** ; **D. STEPHAN**. *Cement & Concrete Composites*, 2015, vol. 57, 64-67
- **TASHIRO et al.** 23rd general Meeting of Cement Association Japan. *Seiten*, 01 January 1969, 136-141
- Chapter 4. X-Ray Powder Diffraction Applied to Cement.. **SCRIVENER** ; **SNELLINGS** ; **LOTHENBACH**. A Practical Guide to Microstructural Analysis of Cementitious Materials. CRC/Taylor & Francis Group, 2016, 107-176
- Powder Diffraction - The Rietveld method and the two-stage method, Springer Verlag, sowie R. Young. **G. WILL**. The Rietveld method, IUCr Monographs on Crystallography. Oxford University Press, 1995, vol. 5
- **R. DINNEBIER** ; **S. BILLINGE**. Powder Diffraction - Theory and Practice. RSC Publishing
- **G. WILL**. Powder Diffraction - The Rietveld method and the two-stage method. Springer Verlag
- **R. YOUNG**. The Rietveld method, IUCr Monographs on Crystallography. Oxford University Press, 1995, vol. 5
- **I. MADSEN** ; **N. SCARLETT** ; **A. KERN**. Description and survey of methodologies for the determination of amorphous content via X-ray powder diffraction.. *Zeitschrift für Kristallographie Crystalline Materials*, 2011, vol. 226 (12), 944-955